# EUROPEAN PATENT SPECIFICATION

(11) **EP 4 633 127 B1**
(45) Date of publication and mention of the grant of the patent: **11.11.2026**
(21) Application number: 25169066.5
(22) Date of filing: 08.04.2025
(51) Int. Cl.: H04N 1/00, G06F 3/12

(54) **ELECTRONIC APPARATUS AND SETTING PROGRAM**
ELEKTRONISCHE VORRICHTUNG UND EINSTELLPROGRAMM
APPAREIL ÉLECTRONIQUE ET PROGRAMME DE RÉGLAGE

(30) Priority: 12.04.2024 JP 2024064963
(43) Date of publication of application: 15.10.2025
(73) Proprietor: KYOCERA Document Solutions Inc., Osaka-shi, Osaka, 540-8585 (JP)
(72) Inventor: NAKAGOSHI, Yusuke, Osaka-shi, Osaka, 540-8585 (JP)
(74) Representative: Herrero & Asociados, S.L.

(56) References cited:
- US-A1- 2008 307 329
- US-A1- 2016 080 600
- US-A1- 2017 078 503

## Description

### BACKGROUND

The present invention relates to an electronic apparatus that sets values corresponding to setting items and a setting program.

In general, a technique that facilitates setting of values corresponding to various setting items for a job is known.

Patent document D1 (US 2008/307329 A1) discloses a technique in which each option is assigned a show/hide attribute, and the display format is determined as one of several formats such as a toggle format or a selective format based on the number of options set to a visible state.

Patent document D2 (US 2017/078503 A1) discloses a technique in which, when a particular setting item is unavailable, the item is treated as "non-displayable" and controlled so as not to be shown on the setting screen, and also a technique in which a prohibited setting item is not merely made unselectable but is displayed at a lower brightness than usual.

### SUMMARY

As one aspect of the present invention, an enhancement of the above-described technique is suggested.

The invention is set out in the appended set of claims.

### BRIEF DESCRIPTION OF THE DRAWINGS

FIG. 1 is a block diagram showing an image processing apparatus according to a first embodiment of the present invention.
FIG. 2 is a diagram showing an example of default state information.
FIG. 3 is a diagram showing an example of value state information.
FIG. 4 is a diagram showing an example of extension function assignment information.
FIG. 5 is a diagram showing an example of extension function-value correspondence information.
FIG. 6 is a diagram showing an example of prohibition information.
FIG. 7 is a sequence diagram showing an example of an operation of an image processing apparatus in a case of displaying a setting screen.
FIG. 8 is a diagram showing an example of a setting screen of a scan image cloud upload job.
FIG. 9 is a sequence diagram showing an example of an operation of an image processing apparatus in a case where a setting item button is pressed on the setting screen.
FIG. 10 is a sequence diagram of "toggle type".
FIG. 11 is a sequence diagram of "radio type".
FIG. 12 is a diagram showing an example of a setting screen when a value displayed in a value display region of a scan orientation button is changed.
FIG. 13 is a diagram showing an example of a choice screen for a setting item "scan orientation".
FIG. 14 is a diagram showing an example of a choice screen for a setting item "file format".
FIG. 15 is a diagram showing an example of a setting screen when a value displayed in a value display region of a file format button is changed.
FIG. 16 is a sequence diagram showing an operation of an image processing apparatus in a case where a value for a setting item is changed.
FIG. 17 is a flowchart showing unselectable value specification processing.
FIG. 18 is a sequence diagram showing another example of an operation of an image processing apparatus in a case where a setting item button is pressed on the setting screen.
FIG. 19 is a block diagram of an image processing apparatus according to a second embodiment of the present invention.
FIG. 20 is a diagram showing another example of extension function assignment information.
FIG. 21 is a diagram showing an example of user management information.
FIG. 22 is a diagram showing an example of group management information.
FIG. 23 is a sequence diagram showing another example of an operation of the image processing apparatus in a case of displaying a setting screen.
FIG. 24 is a block diagram of a system according to a third embodiment of the present invention.

### DETAILED DESCRIPTION

Hereinafter, embodiments of the present invention will be described with reference to the drawings.

### First Embodiment

First, a configuration of an image processing apparatus as an electronic apparatus according to a first embodiment of the present invention will be described.

The image processing apparatus according to the present embodiment may be configured with, for example, an image forming apparatus such as a printer-only machine or a multifunction peripheral (MFP) or may be configured with an image reading apparatus such as a scanner-only machine or an MFP.

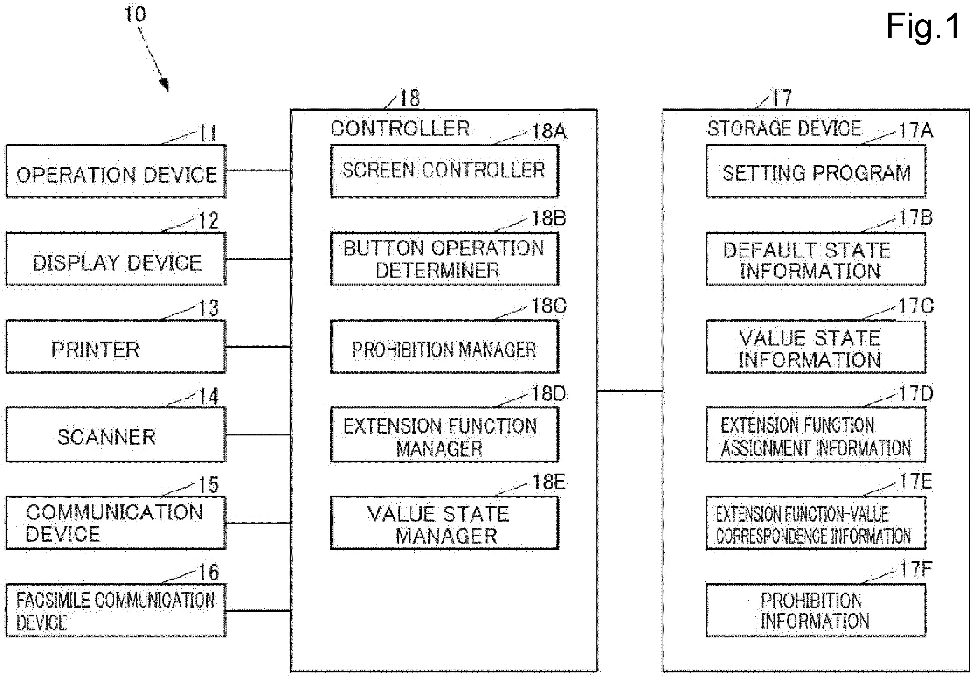

FIG. 1 is a block diagram showing an image processing apparatus 10 that is configured with an MFP. As shown in FIG. 1, the image processing apparatus 10 is a computer including an operation device 11, a display device 12, a printer 13, a scanner 14, a communication device 15, a facsimile communication device 16, a storage device 17, and a controller 18.

The operation device 11 is, for example, an operation device such as buttons to which various operations are input. The display device 12 is, for example, a display device such as a liquid crystal display (LCD) that displays various kinds of information. The printer 13 is a printing device that prints an image on a recording sheet such as paper. The scanner 14 is a reading device that reads an image from a document.

The communication device 15 is a communication device that performs communication with an external apparatus directly in a wired or wireless manner via a network such as a local area network (LAN) or the Internet or not via a network. The facsimile communication device 16 is a facsimile device that performs facsimile communication with an external facsimile machine via a communication line such as a public telephone line.

The storage device 17 is, for example, a non-volatile storage device such as a semiconductor memory or a hard disk drive (HDD) that stores various kinds of information. The controller 18 controls the entire image processing apparatus 10.

The storage device 17 stores a setting program 17A for setting values corresponding to setting items of the image processing apparatus 10. For example, the setting program 17A may be installed on the image processing apparatus 10 during a manufacturing stage of the image processing apparatus 10, may be additionally installed on the image processing apparatus 10 from an external storage medium such as a universal serial bus (USB) memory, or may be additionally installed on the image processing apparatus 10 from the network.

The storage device 17 is able to store default state information 17B indicating default states of a plurality of values that are available to set various setting items of the image processing apparatus 10.

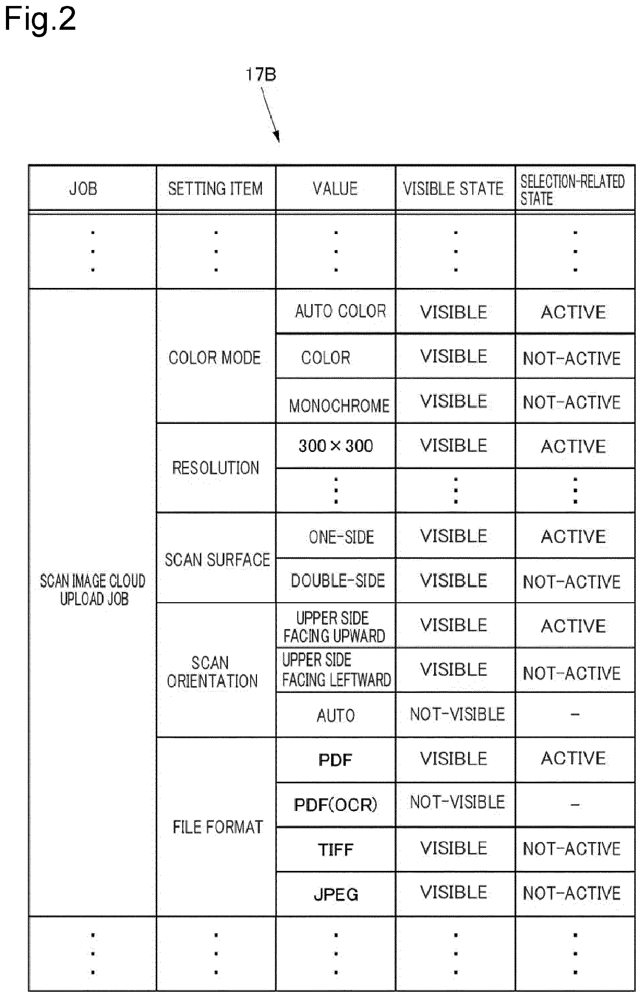

FIG. 2 is a diagram showing an example of the default state information 17B. As shown in FIG. 2, the default state information 17B shows, for each value, a job, a setting item corresponding to the job, a value, a visible state indicating whether the value is visually recognizable by a user, as a choice for the setting item, and a selection-related state indicating a state related to value selection. In the default state information 17B shown in FIG. 2, some values are omitted.

An example of the job in the default state information 17B is a job (hereinafter, referred to as a "scan image cloud upload job") to upload a scan image to a cloud.

For example, when the job is the scan image cloud upload job, examples of the setting items in the default state information 17B include "color mode" indicating a color mode of a scan image, "resolution" indicating a resolution of scanning, "scan surface" indicating one-side scanning or double-side scanning of a document, "scan orientation" indicating an orientation of setting the document with respect to the scanner, and "file format" indicating a file format of the scan image.

For example, when the job is the scan image cloud upload job and the setting item is "color mode", examples of the value in the default state information 17B include "auto color" indicating automatically determining whether the scan image is formed as a color image or a monochrome image, "color" indicating that the scan image is formed as a color image, and "monochrome" indicating that the scan image is formed as a monochrome image, on the basis of colors of pixels in the scan image.

For example, when the job is the scan image cloud upload job and the setting item is "scan orientation", examples of the value in the default state information 17B include "upper side facing upward" indicating that the document is set with respect to the scanner such that an upper side of the document faces upward, "upper side facing leftward" indicating that the document is set with respect to the scanner such that the upper side of the document faces leftward, and "auto" indicating automatically determining the orientation of setting the document with respect to the scanner by detecting an orientation of characters in the scan image.

For example, when the job is the scan image cloud upload job and the setting item is "file format", examples of the value in the default state information 17B include "PDF" indicating a portable document format (PDF) format, "PDF (OCR)" indicating a PDF format in which a result of optical character recognition (OCR) for the scan image is assigned, "TIFF" indicating a tag image file format (TIFF) format, and "JPEG" indicating a joint photographic experts group (JPEG) format.

A visible state in the default state information 17B includes "Visible" indicating a state in which the value is visually recognizable by the user as a choice for the setting item and "Not-Visible" indicating a state in which the value is not visually recognizable by the user as a choice for the setting item.

A selection-related state in the default state information 17B includes "Active" indicating that the value is selectable and the value is selected, "Not-Active" indicating that the value is selectable and the value is not selected, and "Disabled" indicating a state in which the value is unselectable.

For each of a plurality of setting items, the number of values of which the selection-related state is Active is one. The visible state of a value of which the selection-related state is Active, Not-Active, or Disabled is Visible. The selection-related state of a value of which the visible state is Not-Visible is none of Active, Not-Active, and Disabled.

As shown in FIG. 1, the storage device 17 is able to store value state information 17C indicating states of a plurality of values that are available to set various setting items of the image processing apparatus 10.

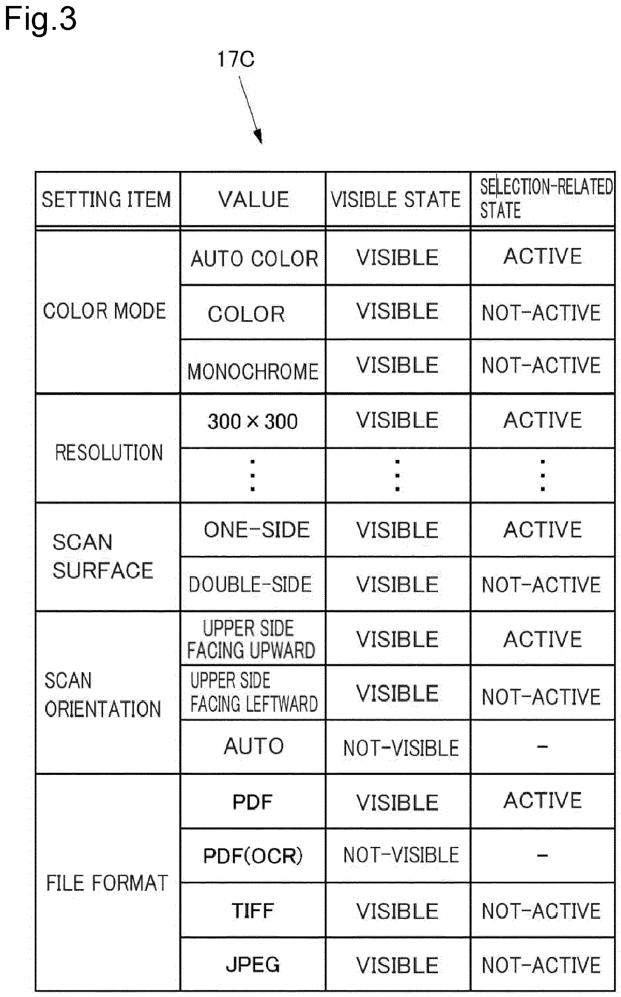

FIG. 3 is a diagram showing an example of the value state information 17C. As shown in FIG. 3, the value state information 17C shows, for each value, a setting item, a value, a visible state, and a selection-related state. In the value state information 17C shown in FIG. 3, some values are omitted.

As shown in FIG. 1, the storage device 17 is able to store extension function assignment information 17D showing an extension function assigned to the image processing apparatus 10.

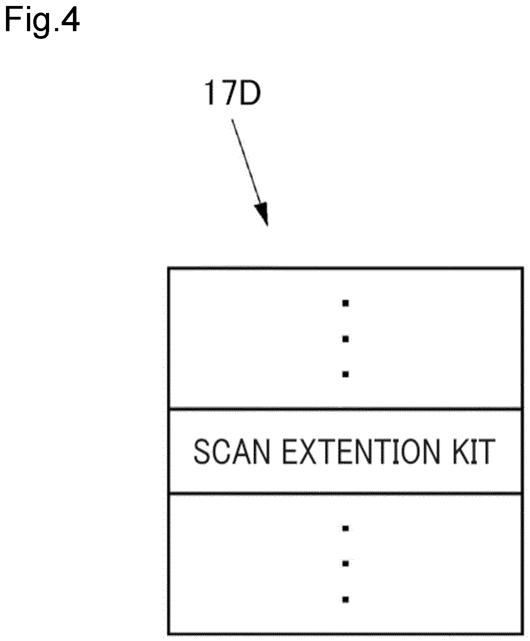

FIG. 4 is a diagram showing an example of the extension function assignment information 17D. As shown in FIG. 4, the extension function assignment information 17D shows a list of extension functions that are assigned to the image processing apparatus 10. For example, the extension function assignment information 17D shown in FIG. 4 indicates that "Scan Extension Kit" as an extension function option of scan is assigned to the image processing apparatus 10. In the extension function assignment information 17D shown in FIG. 4, some values are omitted.

As shown in FIG. 1, the storage device 17 is able to store extension function-value correspondence information 17E indicating a correspondence relationship between an extension function for the image processing apparatus 10 and values corresponding to various setting items of the image processing apparatus 10.

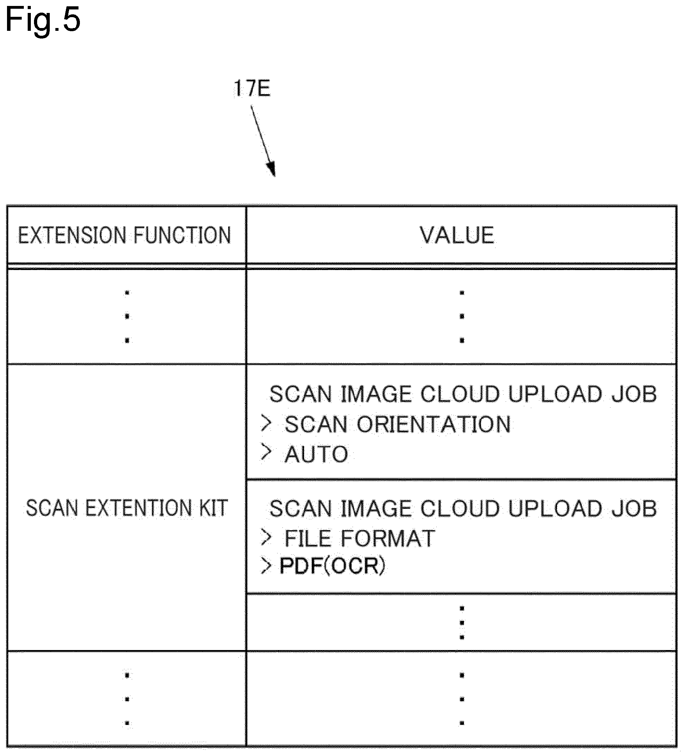

FIG. 5 is a diagram showing an example of the extension function-value correspondence information 17E. As shown in FIG. 5, the extension function-value correspondence information 17E shows, for each extension function, an extension function for the image processing apparatus 10 and a value that is enabled to be set for a setting item in a case where the extension function is assigned to the image processing apparatus 10. For example, the extension function-value correspondence information 17E shown in FIG. 5 shows, as the value that is enabled to be set in a case where "Scan Extension Kit" as an extension function option of scan is assigned to the image processing apparatus 10, "auto" corresponding to the setting item "scan orientation" of the scan image cloud upload job and "PDF (OCR)" corresponding to the setting item "file format" of the scan image cloud upload job. In the extension function-value correspondence information 17E shown in FIG. 5, some values are omitted.

As shown in FIG. 1, the storage device 17 is able to store prohibition information 17F showing prohibitions regarding the values corresponding to various setting items of the image processing apparatus 10.

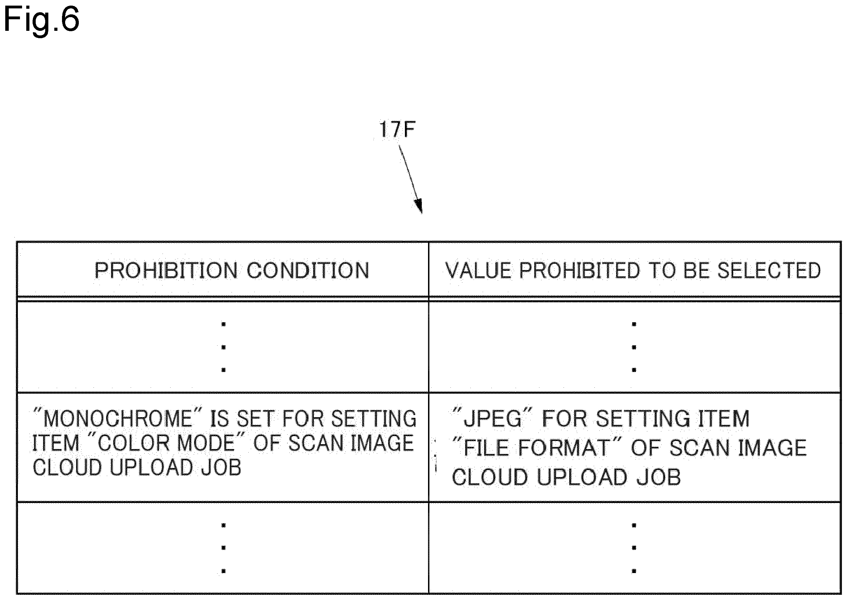

FIG. 6 is a diagram showing an example of the prohibition information 17F. As shown in FIG. 6, the prohibition information 17F shows a condition (hereinafter, referred to as "prohibition condition") in a case where a specific value is prohibited to be selected and a value that is prohibited to be selected, for each prohibition condition. The prohibition condition is, for example, a condition that a specific value is set for a specific setting item different from a target setting item of a value prohibited to be selected.

For example, the prohibition information 17F shown in FIG. 6 shows that "JPEG" is prohibited to be selected for the setting item "file format" of the scan image cloud upload job in a case where "monochrome" is set for the setting item "color mode" of the scan image cloud upload job. This is because an image in a JPEG format is unable to be expressed in only two colors of black and white and always contains gray. In the prohibition information 17F shown in FIG. 6, some values are omitted.

The controller 18 shown in FIG. 1 includes, for example, a central processing unit (CPU), a read only memory (ROM) that stores programs and various kinds of data, and s random access memory (RAM) that serves as a memory to be used as work area for the CPU of the controller 18. The CPU of the controller 18 executes a program stored in the storage device 17 or the ROM of the controller 18.

The controller 18 realizes a screen controller 18A, a button operation determiner 18B, a prohibition manager 18C, an extension function manager 18D, and a value state manager 18E by executing the setting program 17A.

The screen controller 18A controls a screen that is displayed on the display device 12 of the image processing apparatus 10. The button operation determiner 18B determines, in a case where a button (hereinafter, referred to as "setting item button") for a setting item is operated, an operation of the setting item button. The prohibition manager 18C manages a prohibition regarding a value corresponding to a setting item. The extension function manager 18D manages an extension function for the image processing apparatus 10. The value state manager 18E manages states of a plurality of values that are available to set a setting item.

Next, an operation of the image processing apparatus 10 will be described. First, an operation of the image processing apparatus 10 in a case where there is a change in assigned extension functions will be described.

For example, the user can purchase or the like "Scan Extension Kit" for the image processing apparatus 10 to assign "Scan Extension Kit" to the image processing apparatus 10.

In a case where there is a change in extension functions assigned to the image processing apparatus 10, the extension function manager 18D updates the extension function assignment information 17D. For example, in a case where "Scan Extension Kit" is assigned to the image processing apparatus 10, the extension function manager 18D adds "Scan Extension Kit" to the extension function assignment information 17D.

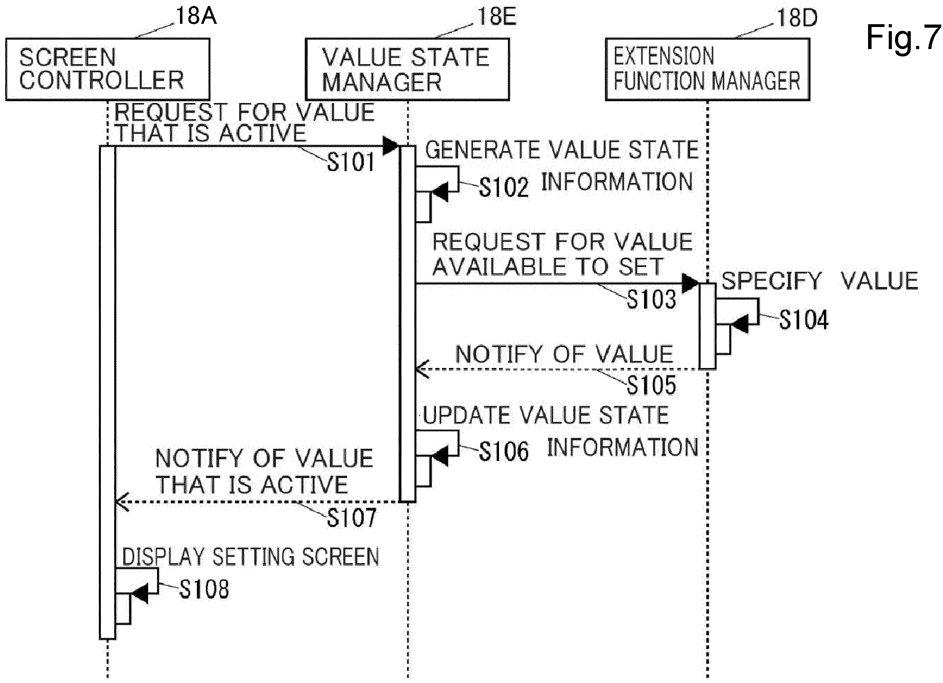

Next, an operation of the image processing apparatus 10 in a case of displaying a setting screen will be described. FIG. 7 is a sequence diagram showing an example of an operation of the image processing apparatus 10 in a case of displaying a setting screen.

The user can instruct the image processing apparatus 10 to display a setting screen of a specific job of the image processing apparatus 10 via the operation device 11. In the following description, a case where the user instructs the image processing apparatus 10 to display a setting screen of the scan image cloud upload job will be described as an example.

If the instruction to display of the setting screen of the scan image cloud upload job is given, as shown in FIG. 7, the screen controller 18A requests the value state manager 18E for a value of which the selection-related state is Active, for each of all setting items of the scan image cloud upload job (Step S101).

If the request in Step S101 is received, the value state manager 18E generates the value state information 17C for the scan image cloud upload job by copying information regarding the scan image cloud upload job in the default state information 17B (Step S102).

If the processing of Step S102 ends, the value state manager 18E requests the extension function manager 18D for values that are enabled to be set for the setting items of the scan image cloud upload job (Step S103).

If the request in Step S103 is received, the extension function manager 18D specifies an extension function in the extension function assignment information 17D associated with the image processing apparatus 10, and specifies values that are enabled to be set for the setting items of the scan image cloud upload job among values associated with the specified extension function in the extension function-value correspondence information 17E (Step S104).

If the processing of Step S104 ends, the extension function manager 18D notifies the value state manager 18E of the values specified in Step S104 (Step S105).

If the notification in Step S105 is received, the value state manager 18E updates the value state information 17C to set the visible state and the selection-related state of the values notified in Step S105 to Visible and Not-Active, respectively (Step S106).

If the processing of Step S106 ends, the value state manager 18E notifies the screen controller 18A of values of which the selection-related state is Active, in the value state information 17C (Step S107).

If the notification in Step S107 is received, the screen controller 18A displays the setting screen of the scan image cloud upload job on the display device 12 on the basis of information notified in Step S107 (Step S108).

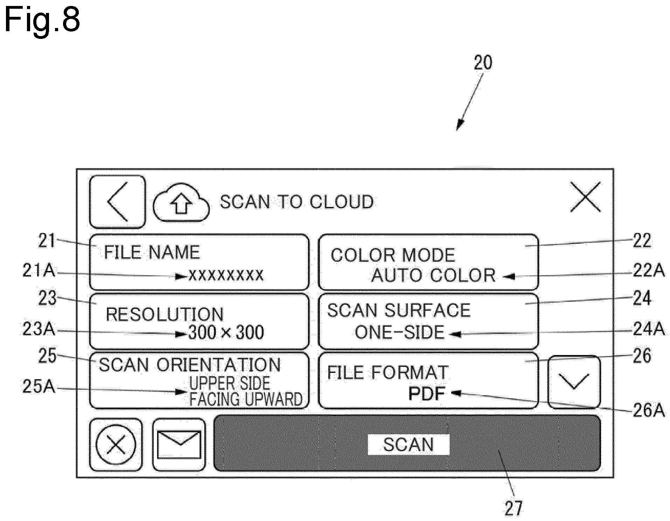

FIG. 8 is a diagram showing an example of a setting screen 20 of the scan image cloud upload job that is displayed in the operation shown in FIG. 7.

The setting screen 20 shown in FIG. 8 includes setting item buttons. That is, the setting screen 20 includes a file name button 21, a color mode button 22, a resolution button 23, a scan surface button 24, a scan orientation button 25, and a file format button 26.

The file name button 21 is a setting item button for "file name" that is a setting item showing a file name of a scan image. The color mode button 22 is a setting item button for the setting item "color mode". The resolution button 23 is a setting item button for the setting item "resolution". The scan surface button 24 is a setting item button for the setting item "scan surface". The scan orientation button 25 is a setting item button for the setting item "scan orientation". The file format button 26 is a setting item button for the setting item "file format".

The setting item button has a value display region where a currently set value is displayed. That is, file name button 21, the color mode button 22, the resolution button 23, the scan surface button 24, the scan orientation button 25, and the file format button 26 have value display regions 21A, 22A, 23A, 24A, 25A, and 26A, respectively.

The screen controller 18A displays the values notified in Step S107 in relation to the setting items "color mode", "resolution", "scan surface", "scan orientation", and "file format" in the value display regions 22A, 23A, 24A, 25A, and 26A, respectively, in Step S108.

In regard to a setting item button for a setting item for which any one value is selected by the user from a plurality of values prepared in advance, there are a case where the setting item button operates as "radio type" in which choices of a value to be set for the setting item are displayed on a screen of the image processing apparatus 10, and a case where the setting item button operates as "toggle type" in which choices of a value to be set for a setting item are not displayed on the screen of the image processing apparatus 10 and a value to be set for the setting item is instantly switched like an electric switch configured to switch on and off by one click.

The setting screen 20 also includes a scan button 27 for starting scan according to settings on the setting screen 20.

Next, an operation of the image processing apparatus 10 in a case where a setting item button is pressed on the setting screen will be described.

The user can press a setting item button in a setting screen displayed on the display device 12. In the following description, a case where the user presses a setting item button in the setting screen 20 shown in FIG. 8 will be described as an example.

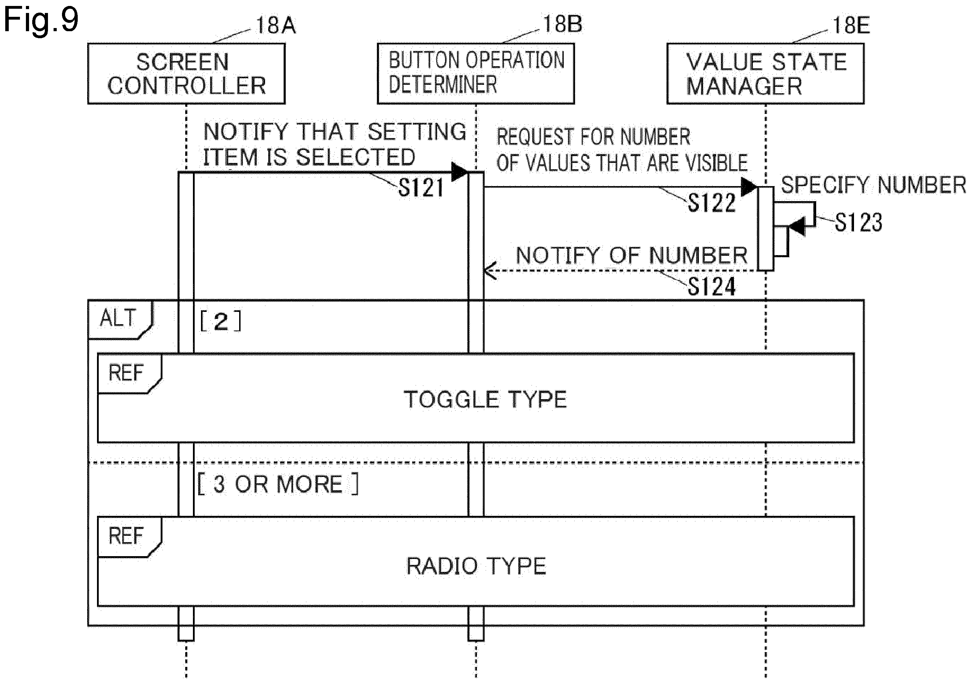

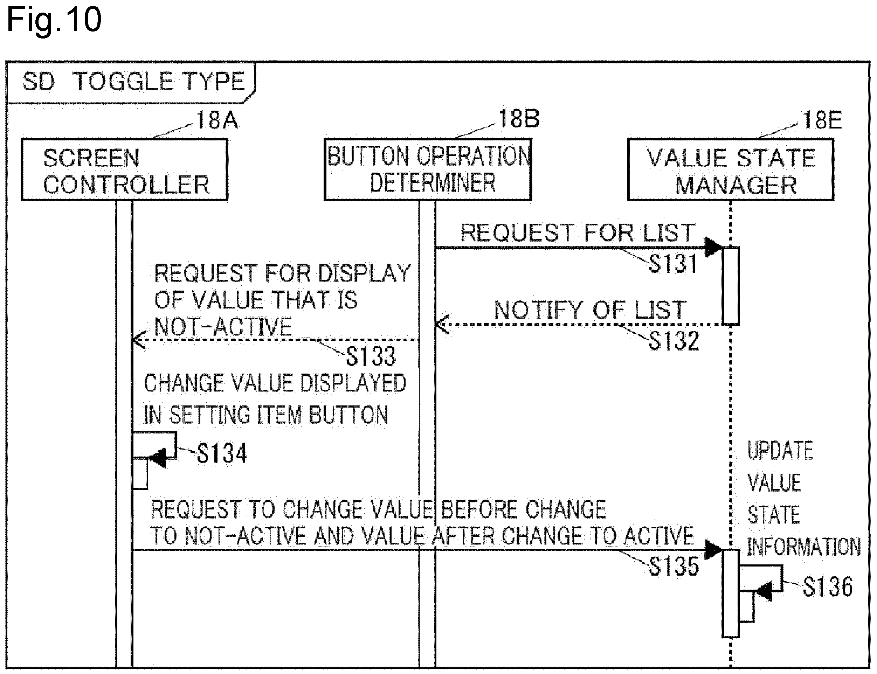

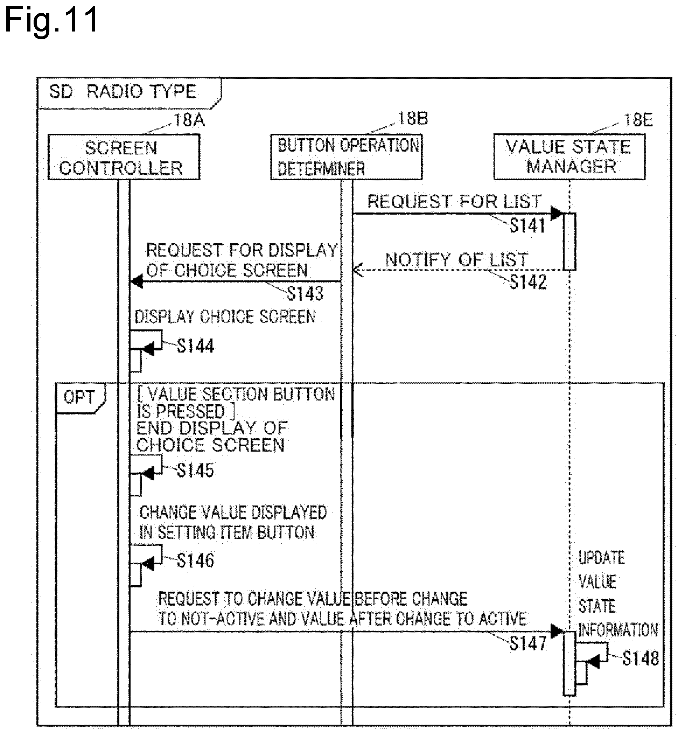

FIG. 9 is a sequence diagram showing an example of an operation of the image processing apparatus 10 in a case where a setting item button is pressed in a setting screen. FIG. 10 is a sequence diagram of "toggle type" shown in FIG. 9. FIG. 11 is a sequence diagram of "radio type" shown in FIG. 9.

If the setting item button is pressed in the setting screen 20, as shown in FIG. 9, the screen controller 18A notifies the button operation determiner 18B that a setting item (hereinafter, referred to as "target setting item") corresponding to the pressed setting item button is selected (Step S121).

For example, the screen controller 18A notifies the button operation determiner 18B that the setting item "color mode" is selected in a case where the color mode button 22 is pressed, notifies the button operation determiner 18B that the setting item "resolution" is selected in a case where the resolution button 23 is pressed, notifies the button operation determiner 18B that the setting item "scan surface" is selected in a case where the scan surface button 24 is pressed, notifies the button operation determiner 18B that the setting item "scan orientation" is selected in a case where the scan orientation button 25 is pressed, and notifies the button operation determiner 18B that the setting item "file format" is selected in a case where the file format button 26 is selected.

If the notification in Step S121 is received, the button operation determiner 18B requests the value state manager 18E for the number of values which correspond to the setting item whose selection is notified in Step S121, that is, the target setting item and of which the visible state is Visible in the value state information 17C (Step S122).

If the request in Step S122 is received, the value state manager 18E specifies the number according to the request in Step S122 on the basis of the value state information 17C (Step S123).

If the processing of Step S123 ends, the value state manager 18E notifies the button operation determiner 18B of the number specified in Step S123 (Step S124).

In a case where the notification in Step S124 is received, when the number notified in Step S124 is two, the button operation determiner 18B requests the value state manager 18E for a list of values which correspond to the target setting item and of which the visible state is Visible in the value state information 17C (Step S131).

For example, in a case where "Scan Extension Kit" is not assigned to the image processing apparatus 10, the values which correspond to the setting item "scan orientation" and of which the visible state is Visible in the value state information 17C are two values of "upper side facing upward" and "upper side facing leftward".

If the request in Step S131 is received, the value state manager 18E notifies the button operation determiner 18B of the list according to the request in Step S131 (Step S132). The value state manager 18E includes the selection-related state of each value in the list notified in Step S132.

If the notification in Step S132 is received, the button operation determiner 18B requests the screen controller 18A to display a value for which the notification that the selection-related state is Not-Active is made in Step S132, in the value display region of the setting item button for the target setting item (Step S133).

If the request in Step S133 is received, the screen controller 18A changes the value displayed in the value display region of the setting item button for the target setting item to the target value of the request in Step S133 (Step S134).

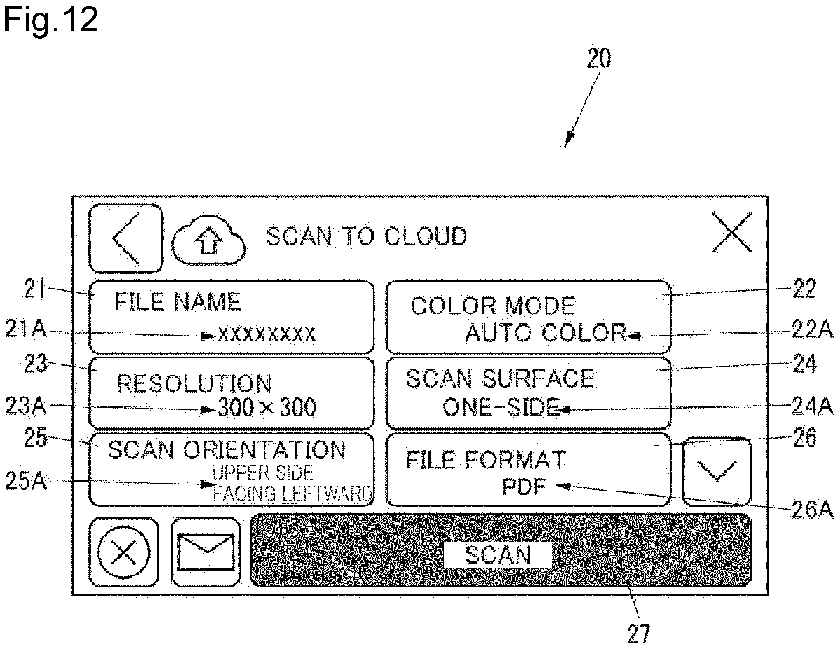

FIG. 12 is a diagram showing an example of the setting screen 20 when the value displayed in the value display region 25A of the scan orientation button 25 is changed in the operations shown in FIG. 9 to FIG. 11.

It is assumed that, in a case where the scan orientation button 25 is pressed in a state in which the setting screen 20 shown in FIG. 8 is displayed on the display device 12, values of which the visible state is Visible among the values corresponding to the setting item "scan orientation" in the value state information 17C are two values of "upper side facing upward" of which the selection-related state is Active and "upper side facing leftward" of which the selection-related state is Not-Active. In this case, the screen controller 18A does not display a choice screen described below, and as shown in FIG. 12, changes the value that is displayed in the value display region 25A of the scan orientation button 25, to "upper side facing leftward" in Step S134.

In this case, in a case where a default value corresponding to the setting item "scan orientation" is "upper side facing upward", the value that is displayed in the value display region 25A of the scan orientation button 25 is different from the default value corresponding to the setting item "scan orientation" of the scan image cloud upload job, as shown in FIG. 12, the screen controller 18A displays the value that is displayed in the value display region 25A of the scan orientation button 25, in color different from color when the value that is displayed in the value display region 25A is the same as the default value corresponding to the setting item "scan orientation" of the scan image cloud upload job, for example, in blue.

Next, the screen controller 18A is able to specify the default value corresponding to the setting item "scan orientation" of the scan image cloud upload job on the basis of the default state information 17B.

As shown in FIG. 10, if the processing of Step S134 ends, in regard to the target setting item, the screen controller 18A requests the value state manager 18E to change the selection-related state of the value before change in Step S134 to Not-Active and to change the selection-related state of the value after change in Step S134 to Active (Step S135).

If the request in Step S135 is received, the value state manager 18E updates the value state information 17C according to the request in Step S135 (Step S136).

It is assumed that, in a case where the scan orientation button 25 is pressed in a state in which the setting screen 20 shown in FIG. 12 is displayed on the display device 12, values of which the visible state is Visible among the values corresponding to the setting item "scan orientation" in the value state information 17C are two values of "upper side facing upward" of which the selection-related state is Not-Active and "upper side facing leftward" of which the selection-related state is Active. In this case, the screen controller 18A does not display a choice screen described below, and as shown in FIG. 8, changes the value that is displayed in the value display region 25A of the scan orientation button 25, to "upper side facing upward" in Step S134.

In this case, in a case where the default value corresponding to the setting item "scan orientation" is "upper side facing upward", the value that is displayed in the value display region 25A of the scan orientation button 25 is the same as the default value corresponding to the setting item "scan orientation" of the scan image cloud upload job. Thus, as shown in FIG. 8, the screen controller 18A displays the value that is displayed in the value display region 25A of the scan orientation button 25, in color when the value that is displayed in the value display region 25A is the same as the default value corresponding to the setting item "scan orientation" of the scan image cloud upload job, for example, in black.

The screen controller 18A is able to specify the default value corresponding to the setting item "scan orientation" of the scan image cloud upload job on the basis of the default state information 17B.

In a case where the notification in Step S124 is received, when the number notified in Step S124 is three or more, the button operation determiner 18B requests the value state manager 18E for a list of values which correspond to the target setting item and of which the visible state is Visible in the value state information 17C (Step S141).

For example, in a case where "Scan Extension Kit" is assigned to the image processing apparatus 10, values that correspond to the setting item "scan orientation" and of which the visible state is Visible in the value state information 17C are three values of "upper side facing upward", "upper side facing leftward", and "auto". Furthermore, for example, in a case where "Scan Extension Kit" is not assigned to the image processing apparatus 10, values that correspond to the setting item "file format" and of which the visible state is Visible in the value state information 17C are three values of "PDF", "TIFF", and "JPEG".

If the request in Step S141 is received, the value state manager 18E notifies the button operation determiner 18B of the list according to the request in the Step S141 (Step S142). The value state manager 18E includes the selection-related state of each value in the list notified in Step S142.

If the notification in Step S142 is received, the button operation determiner 18B requests the screen controller 18A to display a choice screen for causing the user to select one value from a plurality of values (Step S143).

If the request in Step S143 is received, the screen controller 18A causes the display device 12 to display the choice screen according to the request in Step S143 on the setting screen 20 (Step S144).

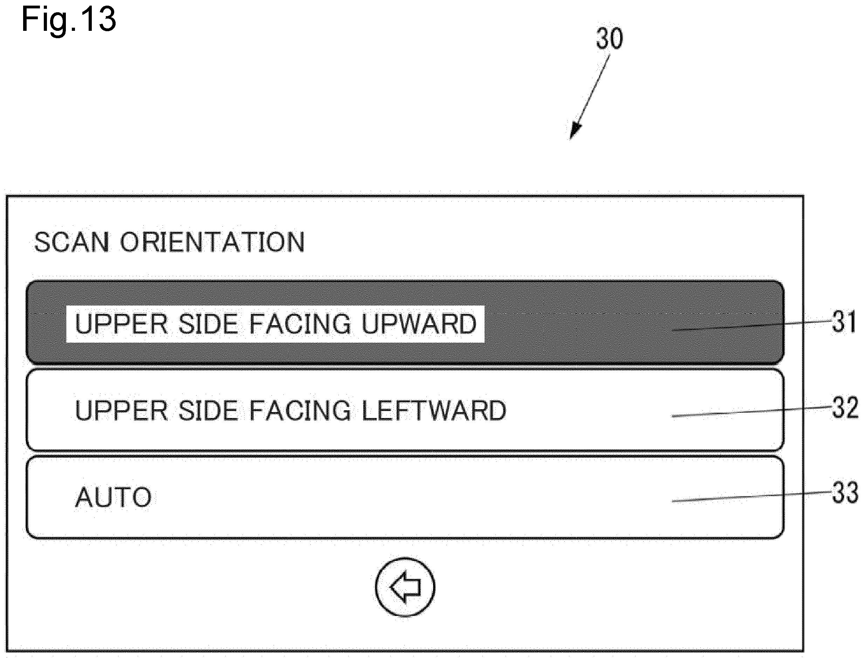

FIG. 13 is a diagram showing an example of a choice screen 30 for the setting item "scan orientation" that is displayed in the operations shown in FIG. 9 to FIG. 11.

The choice screen 30 shown in FIG. 13 is a choice screen for the setting item "scan orientation" in a case where "Scan Extension Kit" is assigned to the image processing apparatus 10. The choice screen 30 includes value selection buttons as a button for selecting a value. The choice screen 30 includes a value selection button 31 for the value "upper side facing upward", a value selection button 32 for the value "upper side facing leftward", and a value selection button 33 for the value "auto". In the choice screen 30, only the value selection button that is currently selected is different in color from other value selection buttons. The choice screen 30 shown in FIG. 13 is in a state in which the value selection button 31 is selected.

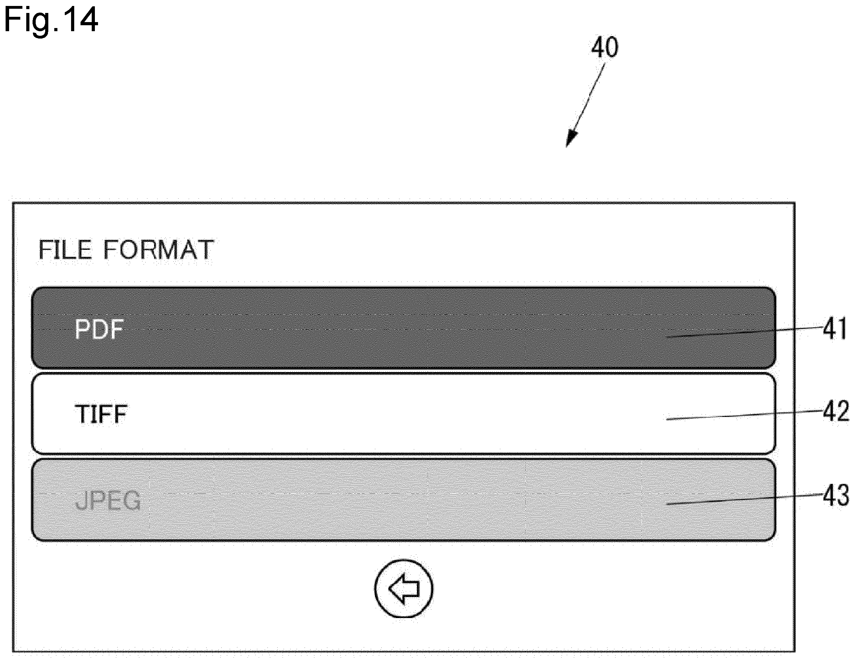

FIG. 14 is a diagram showing an example of a choice screen 40 for the setting item "file format" that is displayed in the operations shown in FIG. 9 to FIG. 11.

The choice screen 40 shown in FIG. 14 is a choice screen for the setting item "file format" in a case where "Scan Extension Kit" is not assigned to the image processing apparatus 10, and the value corresponding to the setting item "color mode" of the scan image cloud upload job is "monochrome". The choice screen 40 includes a value selection button 41 for the value "PDF", a value selection button 42 for the value "TIFF", and a value selection button 43 for the value "JPEG". The choice screen 40 is in a state in which the value selection button 41 is selected.

The screen controller 18A grays out the value selection button for the value of which the selection-related state is Disabled, to make the value selection button unselectable in the choice screen. As described below, in a case where the value corresponding to the setting item "color mode" of the scan image cloud upload job is "monochrome", the selection-related state of the value "JPEG" corresponding to the setting item "file format" becomes Disabled. Accordingly, in the choice screen 40 shown in FIG. 14, the value selection button 43 for the value "JPEG" of which the selection-related state is Disabled is grayed out and becomes unselectable.

As shown in FIG. 11, after the processing of Step S144 ends, if any value selection button is pressed in the choice screen, the screen controller 18A ends the display of the choice screen (Step S145). Accordingly, the setting screen 20 is displayed again on the display device 12.

If the processing of Step S145 ends, the screen controller 18A changes the value displayed in the value display region of the setting item button for the target setting item to a value corresponding to the value selection button pressed in the choice screen (Step S146).

In a case where the scan orientation button 25 is pressed in a state in which the setting screen 20 shown in FIG. 8 is displayed on the display device 12, the choice screen 30 (see FIG. 13) is displayed, and when the value selection button 32 for "upper side facing leftward" is pressed, as shown in FIG. 12, the screen controller 18A changes the value that is displayed in the value display region 25A of the scan orientation button 25, to "upper side facing leftward" in Step S146.

In a case where the default value corresponding to the setting item "scan orientation" is "upper side facing upward", the value that is displayed in the value display region 25A of the scan orientation button 25 is different from the default value corresponding to the setting item "scan orientation" of the scan image cloud upload job. Thus, as shown in FIG. 12, the screen controller 18A displays the value that is displayed in the value display region 25A of the scan orientation button 25, in color different from color when the value that is displayed in the value display region 25A is the same as the default value corresponding to the setting item "scan orientation" of the scan image cloud upload job, for example, in blue.

The screen controller 18A is able to specify the default value corresponding to the setting item "scan orientation" of the scan image cloud upload job on the basis of the default state information 17B.

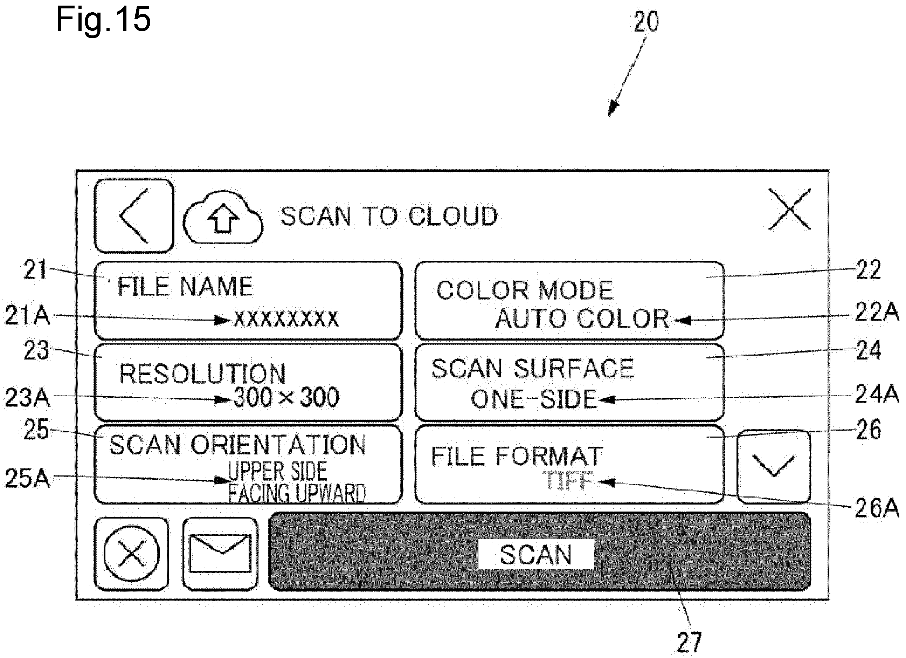

FIG. 15 is a diagram showing an example of the setting screen 20 when the value displayed in the value display region 26A of the file format button 26 is changed in the operations shown in FIG. 9 to FIG. 11.

In a case where the file format button 26 is pressed in a state in which the setting screen 20 shown in FIG. 8 is displayed on the display device 12, the choice screen 40 (see FIG. 14) is displayed, and when the value selection button 42 for "TIFF" is pressed, as shown in FIG. 15, the screen controller 18A changes the value that is displayed in the value display region 26A of the file format button 26, to "TIFF" in Step S146.

In a case where a default value corresponding to the setting item "file format" is "PDF", the value that is displayed in the value display region 26A of the file format button 26 is different from the default value corresponding to the setting item "file format" of the scan image cloud upload job. Thus, as shown in FIG. 15, the screen controller 18A displays the value that is displayed in the value display region 26A of the file format button 26, in color different from color when the value that is displayed in the value display region 26A is the same as the default value corresponding to the setting item "file format" of the scan image cloud upload job, for example, in blue.

The screen controller 18A is able to specify the default value corresponding to the setting item "file format" of the scan image cloud upload job on the basis of the default state information 17B.

As shown in FIG. 11, if the processing of Step S146 ends, in regard to the target setting item, the screen controller 18A requests the value state manager 18E to change the selection-related state of the value before change in Step S146 to Not-Active and to change the selection-related state of the value after change in Step S146 to Active (Step S147).

If the request in Step S147 is received, the value state manager 18E updates the value state information 17C according to the request in Step S147 (Step S148).

Next, an operation of the image processing apparatus 10 in a case where the value corresponding to the setting item is changed will be described.

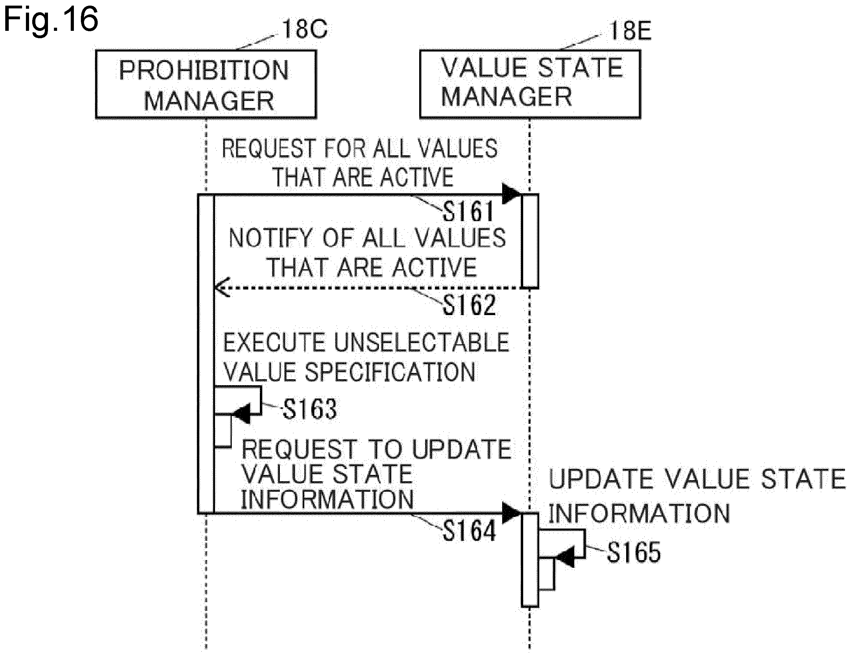

FIG. 16 is a sequence diagram showing an operation of the image processing apparatus 10 in a case where the value corresponding to the setting item is changed.

If the value corresponding to the setting item is changed by the operations shown in FIG. 9 to FIG. 11, as shown in FIG. 16, the prohibition manager 18C requests the value state manager 18E for all values of which the selection-related state is Active, of the job where the value corresponding to the setting item is changed (Step S161).

If the request in Step S161 is received, the value state manager 18E notifies the prohibition manager 18C of all target values of the request in Step S161 in the value state information 17C (Step S162).

If the notification in Step S162 is received, the prohibition manager 18C executes unselectable value specification processing for specifying a value of which the selection-related state should be set to Disabled, in the value state information 17C (Step S163).

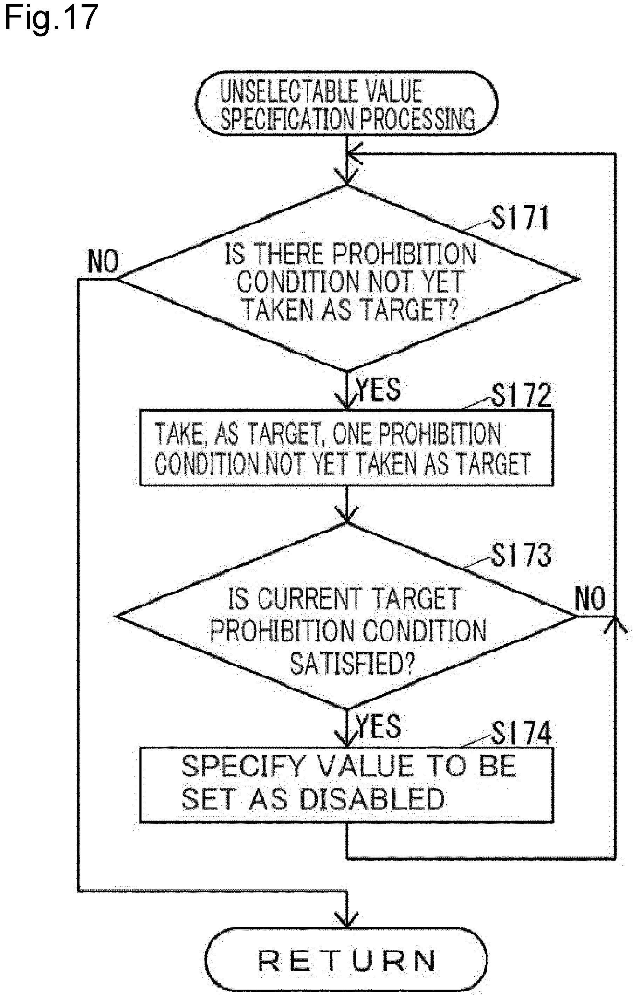

FIG. 17 is a flowchart showing the unselectable value specification processing shown in FIG. 16.

As shown in FIG. 17, the prohibition manager 18C determines whether there is a prohibition condition not yet taken as a target in the present unselectable value specification processing among prohibition conditions in the prohibition information 17F (Step S171).

If determination is made that there is a prohibition condition not yet taken as a target in the present unselectable value specification processing among the prohibition conditions in the prohibition information 17F (in Step S171, YES), the prohibition manager 18C takes, as a target, only one prohibition condition not yet taken as a target in the present unselectable value specification processing among the prohibition condition in the prohibition information 17F (Step S172).

If the processing of Step S172 ends, the prohibition manager 18C determines whether the value received in Step S162 satisfies the current target prohibition condition (Step S173).

For example, in the prohibition information 17F shown in FIG. 6, in a case where the current target prohibition condition is a condition that "monochrome" is set for the setting item "color mode" of the scan image cloud upload job, and the value received in Step S162 is the value "monochrome" corresponding to the setting item "color mode" of the scan image cloud upload job, the prohibition manager 18C determines that the value received in Step S162 satisfies the current target prohibition condition.

If determination is made that the value received in Step S162 satisfies the current target prohibition condition (in Step S173, YES), the prohibition manager 18C specifies a value associated with the current target prohibition condition in the prohibition information 17F as a value of which the selection-related state should be set to Disabled, in the value state information 17C (Step S174).

For example, in the prohibition information 17F shown in FIG. 6, in a case where the current target prohibition condition is a condition that "monochrome" is set for the setting item "color mode" of the scan image cloud upload job, the prohibition manager 18C specifies the value "JPEG" corresponding to the setting item "file format" of the scan image cloud upload job as a value of which the selection-related state should be set to Disabled, in the value state information 17C.

If determination is made in Step S172 that the value received in Step S162 does not satisfy the target prohibition condition (in Step S173, NO) or if the processing of Step S174 ends, the prohibition manager 18C executes the processing of Step S171.

If determination is made that there is no prohibition condition not yet taken as a target in the unselectable value specification processing among the prohibition conditions in the prohibition information 17F (in Step S171, NO), the prohibition manager 18C ends the unselectable value specification processing.

As shown in FIG. 16, if the execution of the unselectable value specification processing shown in Step S163 ends, the prohibition manager 18C requests the value state manager 18E to update the value state information 17C such that the selection-related state of the value specified in the unselectable value specification processing in Step S163 is set to Disabled in the value state information 17C (Step S164).

If the request in Step S164 is received, the value state manager 18E updates the value state information 17C as the request in Step S164 (Step S165). That is, in a case where the visible state of a value of which the selection-related state is requested to be set to Disabled in Step S164 is Visible, the value state manager 18E sets the selection-related state of the value of which the selection-related state is requested to be set to Disabled, to Disabled in the value state information 17C.

The value state manager 18E sets the selection-related state of the value of which the selection-related state is not requested to be set to Disabled in Step S164 among the values of which the selection-related state is Disabled in the value state information 17C, to Not-Active in the value state information 17C.

Accordingly, for example, in the prohibition information 17F shown in FIG. 6, in a case where the value corresponding to the setting item "color mode" of the scan image cloud upload job is "monochrome", the selection-related state of the value "JPEG" corresponding to the setting item "file format" becomes Disabled.

In the above description, in a case where the number of values of which the visible state is Visible is three or more among the values corresponding to the target setting item, even when the number of values of which the selection-related state is Active or Not-Active is two due to the prohibitions, the setting item button of the target setting item operates as "radio type" (see FIG. 14). In contrast, in a case where the number of values of which the visible state is Visible is three or more among the values corresponding to the target setting item, when the number of values of which the selection-related state is Active or Not-Active is two due to the prohibitions, the setting item button of the target setting item may operate as "toggle type".

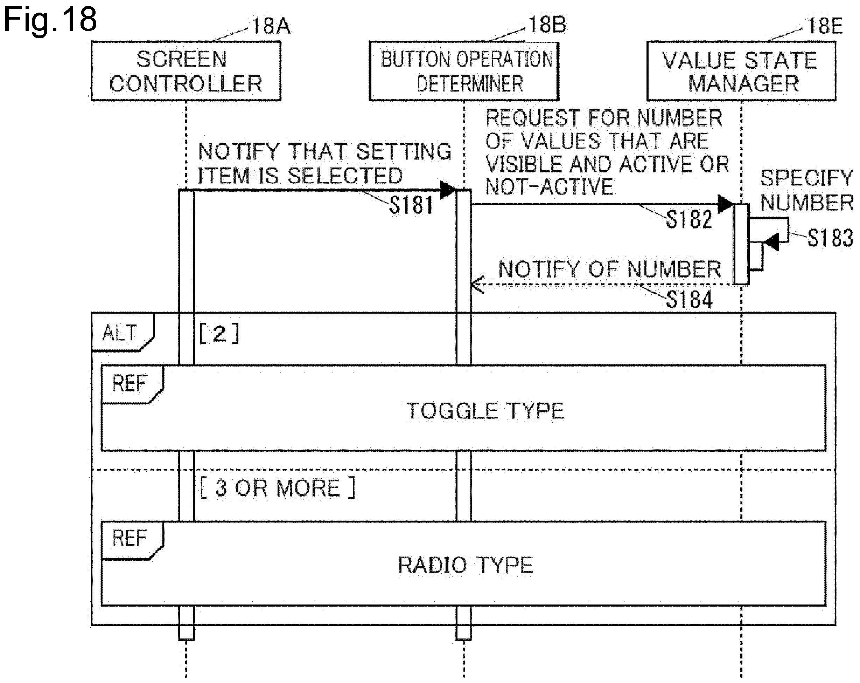

FIG. 18 is a sequence diagram showing an example of an operation, different from the example shown in FIG. 9, of the image processing apparatus 10 in a case where the setting item button is pressed in the setting screen.

If the setting item button is pressed in the setting screen 20, as shown in FIG. 18, similarly to the processing of Step S121 (see FIG. 9), the screen controller 18A notifies the button operation determiner 18B that the target setting item is selected (Step S181).

If the notification in Step S181 is received, the button operation determiner 18B requests the value state manager 18E for the number of values which correspond to the setting item whose selection is notified in Step S181, that is, the target setting item and of which the visible state is Visible in the value state information 17C and the selection-related state is Active or Not-Active (Step S182).

If the request in Step S182 is received, the value state manager 18E specifies the number according to the request in Step S182 on the basis of the value state information 17C (Step S183).

If the processing of Step S183 ends, the value state manager 18E notifies the button operation determiner 18B of the number specified in Step S183 (Step S184).

When the number notified to the button operation determiner 18B in Step S184 is two, the image processing apparatus 10 executes the operation shown in FIG. 10.

When the number notified to the button operation determiner 18B in Step S184 is three or more, the image processing apparatus 10 executes the operation shown in FIG. 11.

For example, in a case where "Scan Extension Kit" is not assigned to the image processing apparatus 10, the values which correspond to the setting item "file format" and of which the visible state is Visible in the value state information 17C are three values of "PDF", "TIFF", and "JPEG".

Here, it is assumed that the selection-related state of "PDF" is Active and the selection-related state of "TIFF" is Not-Active. Furthermore, in the prohibition information 17F shown in FIG. 6, it is assumed that the value corresponding to the setting item "color mode" of the scan image cloud upload job is "monochrome".

In the prohibition information 17F, in a case where the value corresponding to the setting item "color mode" of the scan image cloud upload job is "monochrome", as described above, the selection-related state of the value "JPEG" corresponding to the setting item "file format" becomes Disabled.

If the file format button 26 is pressed in a state in which the setting screen 20 shown in FIG. 8 is displayed on the display device 12, the values of which the visible state is Visible and the selection-related state is Active or Not-Active among the values corresponding to the setting item "file format" in the value state information 17C are two values of "PDF" of which the selection-related state is Active and "TIFF" of which the selection-related state is Not-Active. Accordingly, the screen controller 18A does not display the choice screen 40 (see FIG. 14.), and as shown in FIG. 15, changes the value that is displayed in the value display region 26A of the file format button 26, to "TIFF" in Step S134.

In a case where the default value corresponding to the setting item "file format" is "PDF", the value that is displayed in the value display region 26A of the file format button 26 is different from the default value corresponding to the setting item "file format" of the scan image cloud upload job. Thus, as shown in FIG. 15, the screen controller 18A displays the value that is displayed in the value display region 26A of the file format button 26, in color different from color when the value that is displayed in the value display region 26A is the same as the default value corresponding to the setting item "file format" of the scan image cloud upload job, for example, in blue.

The screen controller 18A is able to specify the default value corresponding to the setting item "file format" of the scan image cloud upload job on the basis of the default state information 17B.

Incidentally, the above-described general technique does not facilitate the setting of the value corresponding to the setting item by changing the operation of the setting item button for setting the value corresponding to the setting item.

In contrast, in a case where the setting item button as the button for the setting item is operated, the image processing apparatus 10 that executes the operation shown in FIG. 9 determines the toggle type in which the choices are not displayed on the screen and the value that is set for the setting item is instantly switched, as the operation of the setting item button when the number of values which correspond to the target setting item of the setting item button and of which the visible state indicating a state of whether the value is visually recognizable by the user as a choice is Visible indicating a state in which the value is visually recognizable by the user as a choice is two, and determines the radio type in which the choices are displayed on the screen, as the operation of the setting item button when the number of values which correspond to the target setting item of the setting item button and of which the visible state is Visible is three or more.

In this way, in a case where the setting item button is operated, when the number of values of which the visible state is Visible and which correspond to the target setting item of the setting item button is two, it is possible to facilitate the setting of the value corresponding to the setting item by changing the operation of the setting item button to the toggle type.

The image processing apparatus 10 that executes the operation shown in FIG. 9 sets the visible state of a specific value to Visible in a case where a specific extension function is assigned to the image processing apparatus 10 (Step S106). As a result, it is possible to change the operation of the setting item button according to whether the specific extension function is assigned to the image processing apparatus 10.

In a case where the setting item button is operated, when the radio type is determined as the operation of the setting item button, the image processing apparatus 10 that executes the operation shown in FIG. 9 displays choices corresponding to the value which correspond to the target setting item of the setting item button and of which the selection-related state is Disabled, on the screen in an unselectable state (see FIG. 14). As a result, it is possible to allow the user to recognize a value that is present as a choice and is currently unselectable due to any reason such as the prohibition.

The image processing apparatus 10 that executes the operation shown in FIG. 9 sets the selection-related state of the value to Disabled according to the prohibition (Step S165). As a result, it is possible to display the choices corresponding to the specific value according to the prohibition on the screen in an unselectable state.

In a case where the setting item button is operated, the image processing apparatus 10 that executes the operation shown in FIG. 18 determines the toggle type in which the choices are not displayed on the screen and the value that is set for the setting item is instantly switched, as the operation of the setting item button when the number of values which correspond to the target setting item of the setting item button and of which the selection-related state indicating a state related to the selection of the value is any of Active indicating that the value is selectable and the value is selected, and Not-Active indicating that the value is selectable and the value is not selected is two, and determines the radio type in which the choices are displayed on the screen, as the operation of the setting item button when the number of values which correspond to the target setting item of the setting item button and of which the selection-related state is Active or Not-Active is three or more.

In this way, in a case where the setting item button is operated, when the number of values which correspond to the target setting item of the setting item button and of which the selection-related state is Active or Not-Active is two, it is possible to facilitate the setting of the value corresponding to the setting item by changing the operation of the setting item button to the toggle type. The image processing apparatus 10 that executes the operation shown in FIG. 18 may further reduce the number of operations to set the value corresponding to the setting item compared to the image processing apparatus 10 that executes the operation shown in FIG. 9.

The image processing apparatus 10 that executes the operation shown in FIG. 18 sets the selection-related state of a specific value to Not-Active in a case where a specific extension function is assigned to the image processing apparatus 10 (Step S106). As a result, it is possible to change the operation of the setting item button according to whether or not the specific extension function is assigned to the image processing apparatus 10.

The image processing apparatus 10 that executes the operation shown in FIG. 18 sets the selection-related state of the value to Disabled according to the prohibition (Step S165). As a result, it is possible to change the operation of the setting item button according to the prohibition.

### Second Embodiment

First, a configuration of an image processing apparatus as an electronic apparatus according to a second embodiment of the present invention will be described.

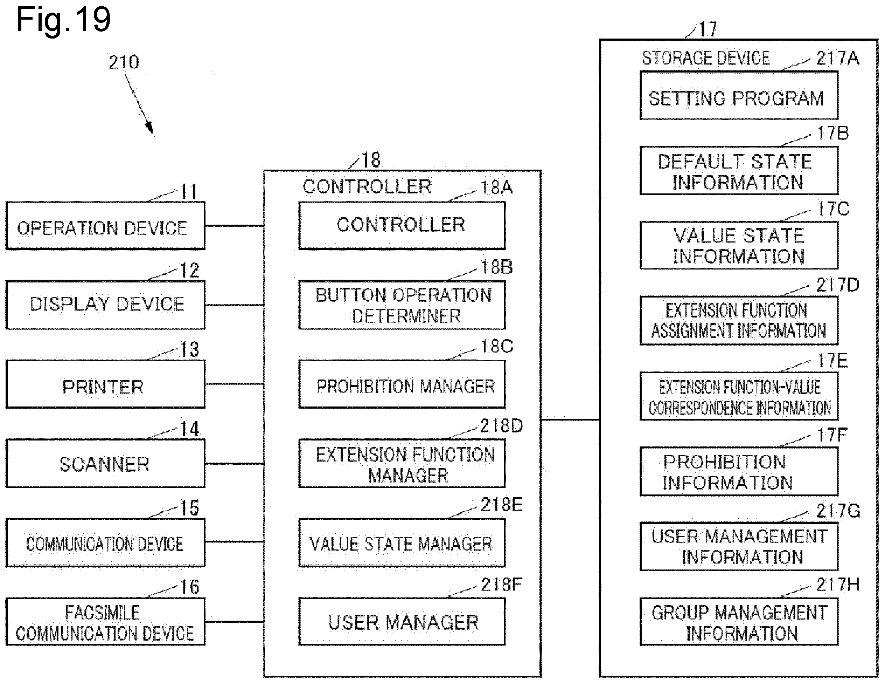

FIG. 19 is a block diagram of an image processing apparatus 210 according to the second embodiment that is configured with an MFP.

The configuration of the image processing apparatus 210 according to the second embodiment is similar to the configuration of the image processing apparatus 10 (see FIG. 1) according to the first embodiment, excluding the following matters. Similar configurations to the components of the image processing apparatus 10 among the components of the image processing apparatus 210 according to the second embodiment are represented by the same reference numerals as the components of the image processing apparatus 10, and detailed description will not be repeated.

As shown in FIG. 19, the image processing apparatus 210 includes, instead of the setting program 17A and the extension function assignment information 17D, a setting program 217A that sets a value corresponding to a setting item of the image processing apparatus 210, and extension function assignment information 217D showing an extension function assigned to the image processing apparatus 210. The image processing apparatus 210 also includes user management information 217G for managing users, and a group management information 217H for managing groups to which users belong.

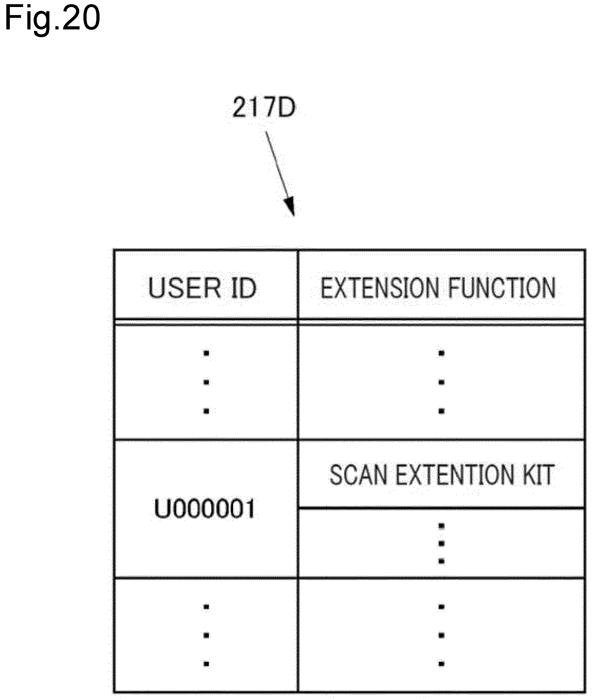

FIG. 20 is a diagram showing an example of the extension function assignment information 217D. The extension function assignment information 217D shown in FIG. 20 shows, for each user, a user ID as identification information of a user, and a list of extension functions assigned to a user. For example, the extension function assignment information 217D shows that "Scan Extension Kit" is assigned to the user whose user ID is "U000001". In the extension function assignment information 217D shown in FIG. 20, some values are omitted.

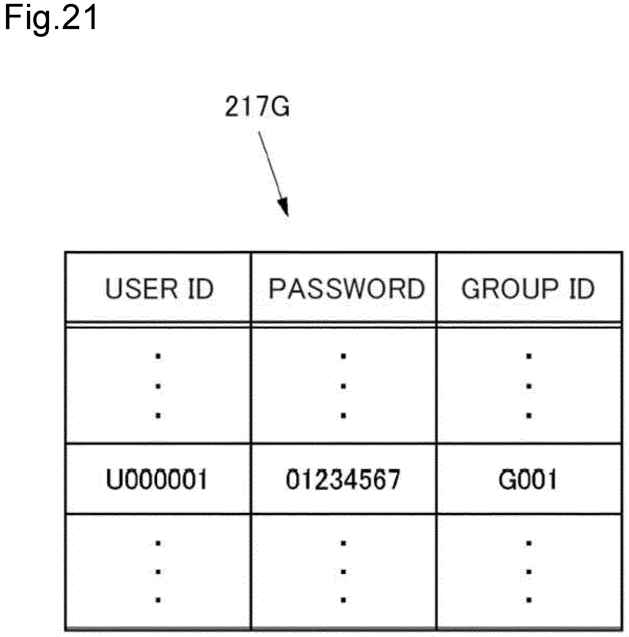

FIG. 21 is a diagram showing an example of user management information 217G. The user management information 217G shown in FIG. 21 shows, for each user, a user ID, a password, and identification information (hereinafter, the identification information of the group is referred to as "group ID") of a group to which the user belongs. For example, the user management information 217G shows that, in regard to the user whose user ID is "U000001", the password is "01234567", and the group ID of the group to which the user belongs is "G001". In the user management information 217G shown in FIG. 21, some values are omitted.

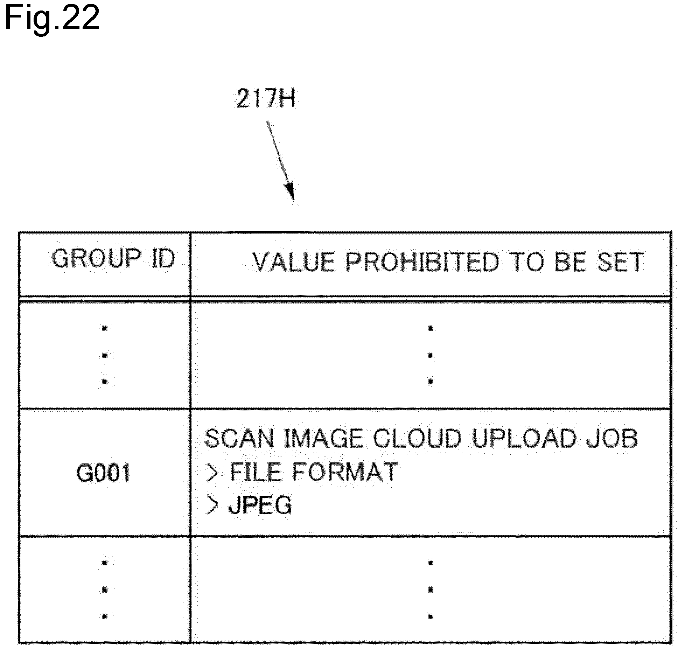

FIG. 22 is a diagram showing an example of the group management information 217H. The group management information 217H shown in FIG. 22 shows, for each group, a group ID, and a value that is prohibited to be set for a setting item by a group. For example, the group management information 217H shows that, in regard to the group whose group ID is "G001", "JPEG" is prohibited to be selected for the setting item "file format" of the scan image cloud upload job. In the group management information 217H shown in FIG. 22, some values are omitted.

A controller 18 shown in FIG. 19 realizes a screen controller 18A, a button operation determiner 18B, a prohibition manager 18C, an extension function manager 218D, a value state manager 218E, and a user manager 218F by executing the setting program 217A.

The extension function manager 218D manages extension functions for the image processing apparatus 210. The value state manager 218E manages states of a plurality of values that are available to set a setting item. The user manager 218F manages users.

Next, an operation of the image processing apparatus 210 will be described.

The operation of the image processing apparatus 210 is similar to the operation of the image processing apparatus 10 (see FIG. 1), excluding the following operation. Detailed description of a similar operation to the operation of the image processing apparatus 10 in the operation of the image processing apparatus 210 will not be repeated.

First, an operation of the image processing apparatus 210 in a case where there is a change in extension functions assigned to the user will be described.

For example, an administrator of the image processing apparatus 210 can purchase or the like "Scan Extension Kit" for any user to assign "Scan Extension Kit" to the user.

The extension function manager 218D updates the extension function assignment information 217D in a case where there is a change in the extension functions assigned to the user. For example, in a case where "Scan Extension Kit" is assigned to the user whose user ID is "U000001", the extension function manager 218D adds "Scan Extension Kit" to the extension function assignment information 217D as an extension function for the user whose user ID is "U000001".

Next, an operation of the image processing apparatus 210 in a case where the user logs in will be described.

The user can request the image processing apparatus 210 for login by inputting a combination of the user ID and the password of the user to the image processing apparatus 210 via the operation device 11.

If the combination of the user ID and the password is input, the user manager 218F of the image processing apparatus 210 permits the login of the user in a case where the same combination as the input combination is included in the user management information 217G.

Next, an operation of the image processing apparatus 210 in a case of displaying a setting screen will be described.

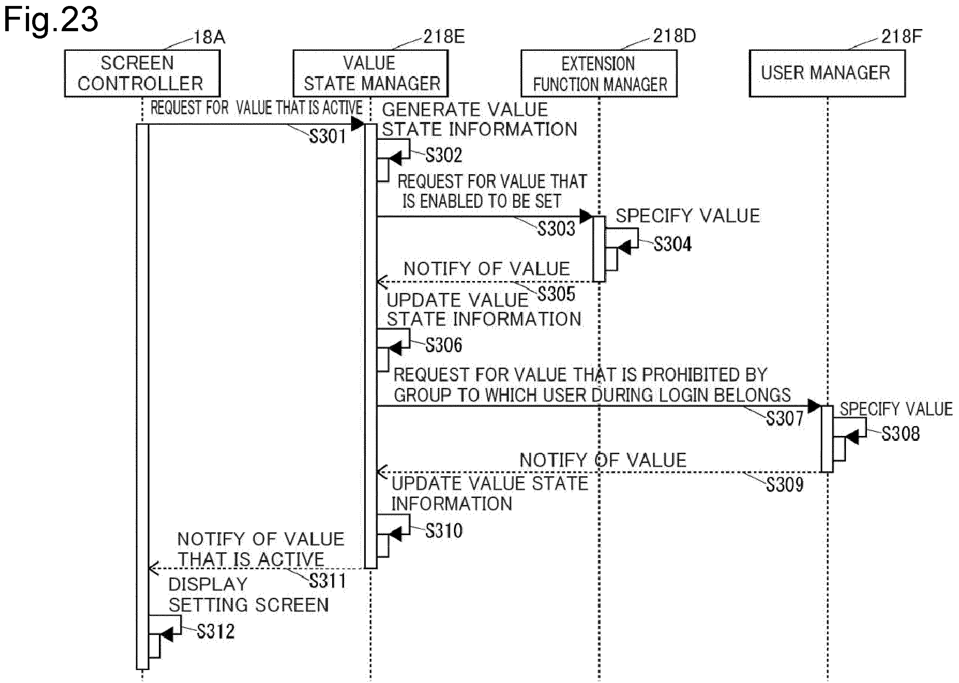

FIG. 23 is a sequence diagram showing an operation of the image processing apparatus 210 in a case of displaying a setting screen.

The user can instruct the image processing apparatus 210 to display a setting screen of a specific job of the image processing apparatus 210 via the operation device 11. In the following description, a case where the user instructs the image processing apparatus 210 to display the setting screen of the scan image cloud upload job will be described as an example.

If the instruction to display the setting screen of the scan image cloud upload job is given, as shown in FIG. 23, the image processing apparatus 210 executes processing of Step S301 to Step S303 similar to the processing of Step S101 to Step S103 (see FIG. 7).

If the request in Step S303 is received from the value state manager 218E, the extension function manager 218D specifies an extension function associated with the logged-in user in the extension function assignment information 217D, and specifies values that are enabled to be set for the setting items of the scan image cloud upload job among values associated with the specified extension function in the extension function-value correspondence information 17E (Step S304).

If the processing of Step S304 ends, the image processing apparatus 210 executes processing of Step S305 and Step S306 similar to the processing of Step S105 and Step S106 (see FIG. 7).

If the processing of Step S306 ends, the value state manager 218E requests the user manager 218F for a value that is prohibited to be set for the setting item by a group to which the logged-in user belongs (Step S307).

If the request in Step S307 is received, the user manager 218F specifies the value that is prohibited to be set for the setting item by the group to which the logged-in user belongs, on the basis of the group management information 217H (Step S308).

If the processing of Step S308 ends, the user manager 218F notifies the value state manager 218E of the value specified in Step S308 (Step S309).

If the notification in Step S309 is received, the value state manager 218E updates the value state information 17C such that a visible state of the value notified in Step S309 is set to "Not-Visible" (Step S310).

If the processing of Step S310 ends, the image processing apparatus 210 executes processing of Step S311 and Step S312 similar to the processing of Step S107 and Step S108 (see FIG. 7).

As described above, the image processing apparatus 210 that executes the operation shown in FIG. 9 sets a visible state of a specific value to Visible in a case where a specific extension function is assigned to the user logged in to the image processing apparatus 210 (Step S306). As a result, it is possible to change the operation of the setting item button according to whether the specific extension function is assigned to the user logged in to the image processing apparatus 210.

The image processing apparatus 210 that executes the operation shown in FIG. 9 sets the visible state of the specific value to Not-Visible in a case where the user logged in to the image processing apparatus 210 belongs to a specific group (Step S310). As a result, it is possible to change the operation of the setting item button according to whether the user logged in to the image processing apparatus 210 belongs to a specific group.

The image processing apparatus 210 that executes the operation shown in FIG. 18 sets a selection-related state of the specific value to Not-Active in a case where the specific extension function is assigned to the user logged in to the image processing apparatus 210 (Step S306). As a result, it is possible to change the operation of the setting item button according to whether the specific extension function is assigned to the user logged in to the image processing apparatus 210.

The image processing apparatus 210 that executes the operation shown in FIG. 18 sets the selection-related state of the specific value to none of Active and Not-Active in a case where the user logged in to the image processing apparatus 210 belongs to the specific group (Step S310). As a result, it is possible to change the operation of the setting item button according to whether the user logged in to the image processing apparatus 210 belongs to the specific group.

### Third Embodiment

First, the configuration of a system according to a third embodiment of the present invention will be described.

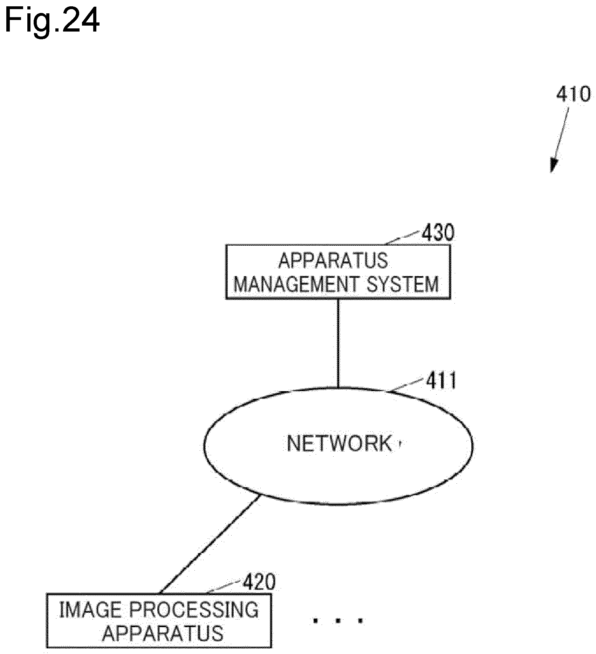

FIG. 24 is a block diagram of a system 410 according to the third embodiment.

As shown in FIG. 24, the system 410 includes an image processing apparatus 420 as an electronic apparatus. The system 410 may include at least one image processing apparatus as an electronic apparatus in addition to the image processing apparatus 420. The configuration of the image processing apparatus 420 according to the third embodiment is similar to the configuration of the image processing apparatus 10 (see FIG. 1) according to the first embodiment and the image processing apparatus 210 (see FIG. 19) according to the second embodiment, excluding the following matters.

The system 410 includes an apparatus management system 430 that manages an image processing apparatus. The apparatus management system 430 may be configured with, for example, one computer such as a personal computer (PC) or may be configured with a plurality of computers. For example, the apparatus management system 430 may be configured with a cloud server.

The image processing apparatus 420 and the apparatus management system 430 can communicate with each other via, for example, a network 411 such as a LAN or the Internet.

The apparatus management system 430 can have a configuration corresponding to some of the components of the image processing apparatus 10 or the image processing apparatus 210. For example, the apparatus management system 430 may have a configuration corresponding to the user management information 217G, the group management information 217H, and the user manager 218F (see FIG. 19). The image processing apparatus 420 does not have a configuration corresponding to the components of the apparatus management system 430 among the components of the image processing apparatus 10 or the image processing apparatus 210.

Next, the operation of the system 410 will be described.

In the system 410, the image processing apparatus 420 and the apparatus management system 430 cooperate to realize the operation of the image processing apparatus 10 or the image processing apparatus 210.

## Claims

1. An image processing apparatus (10, 210) comprising:
a display device (12);
an operation device (11) to which an instruction of a user is input; and
a controller (18) that includes a processor, and functions as, by the processor executing a setting program (17A, 217A):
a value state manager (18E, 218E) configured to manage states of a plurality of values that are available to set a predetermined setting item corresponding to a job processed by the image processing apparatus (10, 210);
a button operation determiner (18B) configured to determine one of a radio type and a toggle type as an operation of a button for the predetermined setting item; and
a screen controller (18A) configured to control a display operation of the display device (12),
wherein the value state manager (18E, 218E) is able to set, as the state of each value, Visible indicating a state in which the value is visually recognizable by the user as a choice of a set value, and Not-Visible indicating a state in which the value is not visually recognizable by the user as a choice of the set value,
the screen controller (18A) causes the display device (12) to display the button on a setting screen, and to display one of the values of which the state is Visible in a value display region of the button,
in a case where the button is operated by the operation device (11), the button operation determiner (18B) determines the toggle type as the operation of the button when the number of values of which the state is Visible is two among the plurality of values, and determines the radio type as the operation of the button when the number of values of which the state is Visible is three or more, **characterized in that**
the screen controller (18A) causes the display device (12) to display a choice screen in which three or more values of which the state is Visible are listed in a case where the radio type is determined as the operation of the button, and does not display the choice screen on the display device (12) and instantly switches the value displayed in the value display region of the button to another value of which the state is Visible in a case where the toggle type is determined as the operation of the button,
the image processing apparatus (10, 210) further comprises a storage device (17) configured to store group management information indicating, for a specific group, a specific value that is prohibited from being set for the predetermined setting item,
wherein the value state manager (18E, 218E) sets a state of the specific value to Not-Visible in a case where a user logged in to the image processing apparatus (10, 210) belongs to the specific group.

2. The image processing apparatus (10, 210) according to claim 1,
wherein the controller (18) further functions as an extension function manager (18D, 218D) configured to manage an extension function for the image processing apparatus (10, 210), and
the value state manager (18E, 218E) sets a state of a specific value to Visible in a case where a specific extension function is assigned to the image processing apparatus (10, 210).

3. The image processing apparatus (10, 210) according to claim 1,
wherein the controller (18) further functions as an extension function manager(18D, 218D) configured to manage extension functions for the image processing apparatus (10, 210) for each user, and
the value state manager (18E, 218E) sets a state of a specific value to Visible in a case where a specific extension function is assigned to the user logged in to the image processing apparatus (10, 210).

4. The image processing apparatus (10, 210) according to claim 1,
wherein the value state manager (18E, 218E) is able to further set, as the state of the value, Disabled indicating a state in which the values is unselectable, and
the screen controller (18A) displays choices corresponding to the value of which the state is Disabled among the choices on the display device (12) in an unselectable state in a case where the radio type is determined as the operation of the button.

5. The image processing apparatus (10, 210) according to claim 4,
wherein the controller (18) further functions as a prohibition manager (18C) configured to manage a prohibition condition indicating a predetermined first value is set for a predetermined first setting item, in association with a second value corresponding to a predetermined second setting item different from the first setting item, and
the value state manager (18E, 218E) sets a state of the second value to Disabled in a case where the prohibition condition is satisfied.

6. An image processing apparatus (10, 210) comprising:
a display device (12);
an operation device (11) to which an instruction of a user is input; and
a controller (18) that includes a processor, and functions as, by the processor executing a setting program (17A, 217A):
a value state manager (18E, 218E) configured to manage states of a plurality of values that are available to set a predetermined setting item corresponding to a job processed by the image processing apparatus (10, 210);
a button operation determiner (18B) configured to determine one of a radio type and a toggle type as an operation of a button for the predetermined setting item; and
a screen controller (18A) configured to control a display operation of the display device (12),
wherein the value state manager (18E, 218E) is able to set, as the state of each value, Active indicating a state in which the value is selectable and the value is selected, and Not-Active indicating a state in which the value is selectable and the value is not selected,
the screen controller (18A) causes the display device (12) to display the button on a setting screen, and to display a first value of which the state is Active in a value display region of the button,
in a case where the button is operated by the operation device (11), the button operation determiner (18B) determines the toggle type as the operation of the button when the number of values of which the state is Active or Not-Active is two among the plurality of values, and determines the radio type as the operation of the button when the number of values of which the state is Active or Not-Active is three or more, **characterized in that**
the screen controller (18A) causes the display device (12) to display a choice screen in which three or more values of which the state is Active or Not-Active are listed in a case where the radio type is determined as the operation of the button, and does not display the choice screen on the display device (12) and instantly switches a set value of the predetermined setting item to a predetermined value in a case where the toggle type is determined as the operation of the button,
the image processing apparatus (10, 210) further comprises a storage device (17) configured to store group management information indicating, for a specific group, a specific value that is prohibited from being set for the predetermined setting item,
wherein the value state manager (18E, 218E) does not set a state of the specific value to any of Active or Not-Active in a case where a user logged in to the image processing apparatus (10, 210) belongs to the specific group.

7. The image processing apparatus (10, 210) according to claim 6,
wherein the controller (18) further functions as an extension function manager(18D, 218D) configured to manage extension functions for the image processing apparatus (10, 210), and
the value state manager (18E, 218E) sets a state of a specific value to Not-Active in a case where a specific extension function is assigned to the image processing apparatus (10, 210).

8. The image processing apparatus (10, 210) according to claim 6,
wherein the controller (18) further functions as an extension function manager(18D, 218D) configured to manage extension functions for the image processing apparatus (10, 210) for each user of the image processing apparatus (10, 210), and
the value state manager (18E, 218E) sets a state of a specific value to Not-Active in a case where a specific extension function is assigned to the user logged in to the image processing apparatus (10, 210).

9. The image processing apparatus (10, 210) according to claim 6,
wherein the controller (18) further functions as a prohibition manager (18C) configured to manage a prohibition condition indicating that a predetermined first value is set for a predetermined first setting item, in association with a second value corresponding to a predetermined second setting item different from the first setting item,
the value state manager (18E, 218E) is able to further set, as the state of the value, Disabled indicating that the value is unselectable, and
the value state manager (18E, 218E) sets a state of the second value to Disabled in a case where the prohibition condition is satisfied.

10. The image processing apparatus (10, 210) according to claim 6,
wherein the value state manager (18E, 218E) changes a state of a value before change to Not-Active and changes a state of a value after change to Active if the operation device (11) receives an instruction to designate one of the choices in a state in which the choices are displayed on the display device (12).

11. A setting program (17A, 217A) causing a computer including a display device (12), an operation device (11) to which an instruction of a user is input, and a processor to function as, by the processor executing the setting program (17A, 217A):
a value state manager (18E, 218E) configured to manage states of a plurality of values that are available to set a predetermined setting item corresponding to a job processed by the image processing apparatus (10, 210);
a button operation determiner (18B) configured to determine one of a radio type and a toggle type as an operation of a button for the predetermined setting item; and
a screen controller (18A) configured to control a display operation of the display device (12),
wherein the setting program (17A, 217A) causes the computer to further function such that
the value state manager (18E, 218E) is able to set, as the state of each value, Visible indicating a state in which the value is visually recognizable by the user as a choice of a set value, and Not-Visible indicating a state in which the value is not visually recognizable by the user as a choice of the set value,
the screen controller (18A) causes the display device (12) to display the button on a setting screen, and to display one of the values of which the state is Visible in a value display region of the button,
in a case where the button is operated by the operation device (11), the button operation determiner (18B) determines the toggle type as the operation of the button when the number of values of which the state is Visible is two among the plurality of values, and determines the radio type as the operation of the button when the number of values of which the state is Visible is three or more, **characterized in that**
the screen controller (18A) causes the display device (12) to display a choice screen in which three or more values of which the state is Visible are listed in a case where the radio type is determined as the operation of the button, and does not display the choice screen on the display device (12) and instantly switches the value displayed in the value display region of the button to another value of which the state is Visible in a case where the toggle type is determined as the operation of the button,
the computer further comprises a storage device (17) configured to store group management information indicating, for a specific group, a specific value that is prohibited from being set for the predetermined setting item,
wherein the value state manager (18E, 218E) sets a state of the specific value to Not-Visible in a case where a user logged in to the image processing apparatus (10, 210) belongs to the specific group.

12. A setting program (17A, 217A) causing a computer including a display device (12), an operation device (11) to which an instruction of a user is input, and a processor to function as, by the processor executing the setting program (17A, 217A):
a value state manager (18E, 218E) configured to manage states of a plurality of values that are available to set a predetermined setting item corresponding to a job processed by the image processing apparatus (10, 210),
a button operation determiner (18B) configured to determine one of a radio type and a toggle type as an operation of a button for the predetermined setting item, and
a screen controller (18A) configured to control a display operation of the display device (12),
wherein the setting program (17A, 217A) causes the computer to further function such that
the value state manager (18E, 218E) is able to set, as the state of each value, Active indicating a state in which the value is selectable and the value is selected, and Not-Active indicating a state in which the value is selectable and the value is not selected,
the screen controller (18A) causes the display device (12) to display the button on a setting screen, and to display a first value of which the state is Active in a value display region of the button, in a case where the button is operated by the operation device (11), the button operation determiner (18B) determines the toggle type as the operation of the button when the number of values of which the state is Active or Not-Active is two among the plurality of values, and determines the radio type as the operation of the button when the number of values of which the state is Active or Not-Active is three or more,
**characterized in that**
the screen controller (18A) causes the display device (12) to display a choice screen in which three or more values of which the state is Active or Not-Active are listed in a case where the radio type is determined as the operation of the button, and does not display the choice screen on the display device (12) and instantly switches a set value of the predetermined setting item to a predetermined value in a case where the toggle type is determined as the operation of the button,
the computer further comprises a storage device (17) configured to store group management information indicating, for a specific group, a specific value that is prohibited from being set for the predetermined setting item,
wherein the value state manager (18E, 218E) does not set a state of the specific value to any of Active or Not-Active in a case where a user logged in to the image processing apparatus (10, 210) belongs to the specific group.

## Patentansprüche

1. Bildverarbeitungsvorrichtung (10, 210), umfassend:
eine Anzeigevorrichtung (12);
eine Bedieneinrichtung (11), in die eine Anweisung eines Benutzers eingegeben wird; und eine Steuereinheit (18), die einen Prozessor umfasst und durch Ausführen eines Einstellprogramms (17A, 217A) mittels des Prozessors fungiert als ein Wertzustandsverwalter (18E, 218E), der dazu konfiguriert ist, Zustände einer Vielzahl von Werten zu verwalten, die bereitstehen zur Einstellung eines vorbestimmten Einstellungselements entsprechend einem von der Bildverarbeitungsvorrichtung (10, 210) verarbeiteten Auftrag;
ein Schaltflächenmodusbestimmer (18B), der dazu konfiguriert ist, entweder einen Radio-Typ oder einen Umschalt-Typ als Modus einer Schaltfläche für das vorbestimmte Einstellungselement zu bestimmen; und eine Bildschirmsteuerung (18A), die dazu konfiguriert ist, einen Anzeigevorgang der Anzeigevorrichtung (12) zu steuern,
wobei der Wertzustandsverwalter (18E, 218E) in der Lage ist, als Zustand jedes Werts "Sichtbar" festzulegen, was einen Zustand angibt, in dem der Wert für den Benutzer visuell als Auswahl eines eingestellten Werts erkennbar ist, und "Nicht sichtbar" festzulegen, was einen Zustand angibt, in dem der Wert für den Benutzer nicht visuell als Auswahl des eingestellten Werts erkennbar ist, die Bildschirmsteuerung (18A) bewirkt, dass die Anzeigevorrichtung (12) die Schaltfläche auf einem Einstellungsbildschirm anzeigt und einen der Werte, dessen Zustand "Sichtbar" ist, in einem Wertanzeigebereich der Schaltfläche anzeigt,
in einem Fall, in dem die Schaltfläche durch die Bedieneinrichtung (11) betätigt wird, der Schaltflächenmodusbestimmer (18B) den Umschalt-Typ als den Modus der Schaltfläche bestimmt, wenn die Anzahl der Werte, bei denen der Zustand "Sichtbar" vorliegt, unter den mehreren Werten zwei beträgt, und den Radio-Typ als den Modus der Schaltfläche bestimmt, wenn die Anzahl der Werte, deren Zustand "Sichtbar" ist, drei oder mehr beträgt,
**dadurch gekennzeichnet, dass** die Bildschirmsteuerung (18A) die Anzeigevorrichtung (12) veranlasst, einen Auswahlbildschirm anzuzeigen, in dem drei oder mehr Werte, deren Zustand "Sichtbar" ist, aufgelistet sind, wenn der Radio-Typ als Modus der Schaltfläche bestimmt wird, und den Auswahlbildschirm nicht auf der Anzeigevorrichtung (12) anzuzeigen und den im Wertanzeigebereich der Schaltfläche angezeigten Wert sofort auf einen anderen Wert umzuschalten, dessen Zustand "Sichtbar" ist, in einem Fall, in dem der Umschalt-Typ als Modus der Schaltfläche bestimmt wird, wobei die Bildverarbeitungsvorrichtung (10, 210) ferner eine Speichervorrichtung (17) umfasst, die dazu konfiguriert ist, Gruppenverwaltungsinformationen zu speichern, die für eine bestimmte Gruppe einen bestimmten Wert angeben, dessen Einstellung für das vorbestimmte Einstellungselement untersagt ist,
wobei der Wertzustandsverwalter (18E, 218E) den Zustand des bestimmten Werts auf "Nicht sichtbar" setzt, falls ein bei der Bildverarbeitungsvorrichtung (10, 210) angemeldeter Benutzer zu der bestimmten Gruppe gehört.

2. Bildverarbeitungsvorrichtung (10, 210) nach Anspruch 1, wobei die Steuereinheit (18) ferner als Erweiterungsfunktionsverwalter (18D, 218D) fungiert, der dazu konfiguriert ist, eine Erweiterungsfunktion für die Bildverarbeitungsvorrichtung (10, 210) zu verwalten, und der Wertzustandsverwalter (18E, 218E) einen Zustand eines bestimmten Werts auf "Sichtbar" setzt, in einem Fall, in dem eine spezifische Erweiterungsfunktion der Bildverarbeitungsvorrichtung (10, 210) zugewiesen ist.

3. Die Bildverarbeitungsvorrichtung (10, 210) nach Anspruch 1, wobei die Steuereinheit (18) ferner als Erweiterungsfunktionsverwalter (18D, 218D) fungiert, der dazu konfiguriert ist, Erweiterungsfunktionen für die Bildverarbeitungsvorrichtung (10, 210) für jeden Benutzer zu verwalten, und der Wertzustandsverwalter (18E, 218E) den Zustand eines bestimmten Werts auf "Sichtbar" setzt, in einem Fall, in dem eine bestimmte Erweiterungsfunktion dem bei der Bildverarbeitungsvorrichtung (10, 210) angemeldeten Benutzer zugewiesen ist.

4. Bildverarbeitungsvorrichtung (10, 210) nach Anspruch 1, wobei der Wertzustandsverwalter (18E, 218E) fähig ist, als Zustand des Werts ferner "Deaktiviert" festzulegen, was einen Zustand angibt, in dem der Wert unauswählbar ist, und die Bildschirmsteuerung (18A) Auswahlmöglichkeiten, entsprechend dem Wert, dessen Zustand "Deaktiviert" ist, unter den Auswahlmöglichkeiten auf der Anzeigevorrichtung (12) in einem unauswählbaren Zustand anzeigt, wenn der Radio-Typ als Modus der Schaltfläche bestimmt wird.

5. Bildverarbeitungsvorrichtung (10, 210) nach Anspruch 4, wobei die Steuereinheit (18) ferner als Sperrverwalter (18C) fungiert, der dazu konfiguriert ist, eine Sperrbedingung zu verwalten, die anzeigt, dass ein vorbestimmter erster Wert für ein vorbestimmtes erstes Einstellelement gesetzt ist, in Verbindung mit einem zweiten Wert, der einem vorbestimmten zweiten Einstellelement entspricht, das sich vom ersten Einstellelement unterscheidet, und der Wertzustandsverwalter (18E, 218E) einen Zustand des zweiten Werts auf "Deaktiviert" setzt, in einem Fall, in dem die Sperrbedingung erfüllt ist.

6. Bildverarbeitungsvorrichtung (10, 210), umfassend:
eine Anzeigevorrichtung (12);
eine Bedieneinrichtung (11), in die eine Anweisung eines Benutzers eingegeben wird; und eine Steuereinheit (18), die einen Prozessor umfasst und mittels Ausführens eines Einstellprogramms (17A, 217A) mittels des Prozessors fungiert als:
ein Wertzustandsverwalter (18E, 218E), der dazu konfiguriert ist, Zustände einer Vielzahl von Werten zu verwalten, die zur Verfügung stehen um ein vorbestimmtes Einstellungselement entsprechend einem von der Bildverarbeitungsvorrichtung (10, 210) verarbeiteten Auftrag einzustellen, ein Schaltflächenmodusbestimmer (18B), der dazu konfiguriert ist, als Modus einer Schaltfläche für das vorbestimmte Einstellungselement entweder einen Radio-Typ oder einen Umschalt-Typ zu bestimmen, und eine Bildschirmsteuerung (18A), die dazu konfiguriert ist, einen Anzeigevorgang der Anzeigevorrichtung (12) zu steuern,
wobei der Wertzustandsverwalter (18E, 218E) in der Lage ist, als Zustand jedes Werts "Aktiv" zu setzen, was einen Zustand angibt, in dem der Wert auswählbar ist und der Wert ausgewählt ist, und "Nicht-Aktiv" zu setzen, was einen Zustand angibt, in dem der Wert auswählbar ist und der Wert nicht ausgewählt ist, die Bildschirmsteuerung (18A) bewirkt, dass die Anzeigevorrichtung (12) die Schaltfläche auf einem Einstellungsbildschirm anzeigt und einen ersten Wert, dessen Zustand "Aktiv" ist, in einem Wertanzeigebereich der Schaltfläche anzeigt,
in einem Fall, in dem die Schaltfläche durch die Bedieneinrichtung (11) betätigt wird, der Schaltflächenmodusbestimmer (18B) den Umschalt-Typ als den Modus der Schaltfläche bestimmt, wenn die Anzahl der Werte, deren Zustand "Aktiv" oder "Nicht-Aktiv" ist, unter der Vielzahl von Werten zwei beträgt, und den Radio-Typ als den Modus der Schaltfläche bestimmt, wenn die Anzahl der Werte, deren Zustand "Aktiv" oder "Nicht-Aktiv" ist, drei oder mehr beträgt,
**dadurch gekennzeichnet, dass** die Bildschirmsteuerung (18A) bewirkt, dass die Anzeigevorrichtung (12), einen Auswahlbildschirm anzeigt, in dem drei oder mehr Werte, deren Zustand "Aktiv" oder "Nicht-Aktiv" ist, aufgelistet sind, in einem Fall, in dem der Radio-Typ als Modus der Schaltfläche bestimmt wird, und den Auswahlbildschirm nicht auf der Anzeigevorrichtung (12) anzeigt und sofort einen festgelegten Wert des vorbestimmten Einstellungselements auf einen vorbestimmten Wert umschaltet, wenn als Modus der Schaltfläche der Umschalt-Typ bestimmt wird, die Bildverarbeitungsvorrichtung (10, 210) ferner eine Speichervorrichtung (17) umfasst, die dazu konfiguriert ist, Gruppenverwaltungsinformationen zu speichern, die für eine bestimmte Gruppe einen bestimmten Wert angeben, dessen Einstellung für das vorbestimmte Einstellungselement gesperrt ist,
wobei der Wertzustandsverwalter (18E, 218E) den Zustand des bestimmten Werts weder auf "Aktiv" noch auf "Nicht-Aktiv" setzt, in einem Fall, in dem ein bei der Bildverarbeitungsvorrichtung (10, 210) angemeldeter Benutzer zu der bestimmten Gruppe gehört.

7. Bildverarbeitungsvorrichtung (10, 210) nach Anspruch 6, wobei die Steuereinheit (18) ferner als Erweiterungsfunktionsverwalter (18D, 218D) fungiert, der so konfiguriert ist, dass er Erweiterungsfunktionen für die Bildverarbeitungsvorrichtung (10, 210) verwaltet, und der Wertzustandsverwalter (18E, 218E) den Zustand eines bestimmten Werts auf "Nicht-Aktiv" setzt, in einem Fall, in dem eine bestimmte Erweiterungsfunktion der Bildverarbeitungsvorrichtung (10, 210) zugewiesen ist.

8. Bildverarbeitungsvorrichtung (10, 210) nach Anspruch 6, wobei die Steuereinheit (18) ferner als Erweiterungsfunktionsverwalter (18D, 218D) fungiert, der dazu konfiguriert ist, Erweiterungsfunktionen für die Bildverarbeitungsvorrichtung (10, 210) für jeden Benutzer der Bildverarbeitungsvorrichtung (10, 210) zu verwalten, und der Wertzustandsverwalter (18E, 218E) den Zustand eines bestimmten Werts auf "Nicht-Aktiv" setzt, in einem Fall, in dem eine bestimmte Erweiterungsfunktion dem bei der Bildverarbeitungsvorrichtung (10, 210) angemeldeten Benutzer zugewiesen ist.

9. Bildverarbeitungsvorrichtung (10, 210) nach Anspruch 6, wobei die Steuereinheit (18) ferner als Sperrverwalter (18C) fungiert, der dazu konfiguriert ist, eine Sperrbedingung zu verwalten, die anzeigt, dass ein vorbestimmter erster Wert für ein vorbestimmtes erstes Einstellelement festgelegt ist, in Verbindung mit einem zweiten Wert, der einem vorbestimmten zweiten Einstellelement entspricht, das sich vom ersten Einstellelement unterscheidet, der Wertzustandsverwalter (18E, 218E) in der Lage ist, als Zustand des Werts zusätzlich "Deaktiviert" zu setzen, was anzeigt, dass der Wert nicht auswählbar ist, und der Wertzustandsverwalter (18E, 218E) den Zustand des zweiten Werts auf "Deaktiviert" setzt in einem Fall, in dem die Sperrbedingung erfüllt ist.

10. Bildverarbeitungsvorrichtung (10, 210) nach Anspruch 6, wobei der Wertzustandsverwalter (18E, 218E) den Zustand eines Werts vor Änderung auf "Nicht-Aktiv" setzt und den Zustand eines Werts nach Änderung auf "Aktiv" setzt, wenn die Bedieneinrichtung (11) einen Befehl empfängt zum Auswählen einer der Auswahlmöglichkeiten in einem Zustand, in dem die Auswahlmöglichkeiten auf der Anzeigevorrichtung (12) angezeigt werden.

11. Ein Einstellprogramm (17A, 217A), das bewirkt, dass ein Computer, der eine Anzeigevorrichtung (12), eine Bedieneinrichtung (11), in die eine Anweisung eines Benutzers eingegeben wird, und einen Prozessor umfasst, durch Ausführen des Einstellprogramms (17A, 217A) mittels des Prozessors fungiert als:
ein Wertzustandsverwalter (18E, 218E), der dazu konfiguriert ist, Zustände einer Vielzahl von Werten zu verwalten, die bereitstehen zur Einstellung eines vorbestimmten Einstellungselements entsprechend einem von der Bildverarbeitungsvorrichtung (10, 210) verarbeiteten Auftrag;
ein Schaltflächenmodusbestimmer (18B), der dazu konfiguriert ist, entweder einen Radio-Typ oder einen Umschalt-Typ als Modus einer Schaltfläche für das vorbestimmte Einstellungselement zu bestimmen, und eine Bildschirmsteuerung (18A), die dazu konfiguriert ist, einen Anzeigevorgang der Anzeigevorrichtung (12) zu steuern,
wobei das Einstellprogramm (17A, 217A) den Computer dazu veranlasst, ferner so zu arbeiten, dass der Wertzustandsverwalter (18E, 218E) in der Lage ist, als Zustand jedes Werts "Sichtbar" festzulegen, was einen Zustand angibt, in dem der Wert für den Benutzer visuell als Auswahl eines eingestellten Werts erkennbar ist, und "Nicht sichtbar" festzulegen, was einen Zustand angibt, in dem der Wert für den Benutzer nicht visuell als Auswahl des eingestellten Werts erkennbar ist, die Bildschirmsteuerung (18A) bewirkt, dass die Anzeigevorrichtung (12) die Schaltfläche auf einem Einstellungsbildschirm anzeigt und einen der Werte, dessen Zustand "Sichtbar" ist, in einem Wertanzeigebereich der Schaltfläche anzeigt,
in einem Fall, in dem die Schaltfläche durch die Bedieneinrichtung (11) betätigt wird, der Schaltflächenmodusbestimmer (18B) den Umschalt-Typ als den Modus der Schaltfläche bestimmt, wenn die Anzahl der Werte, bei denen der Zustand "Sichtbar" vorliegt, unter den mehreren Werten zwei beträgt, und den Radio-Typ als den Modus der Schaltfläche bestimmt, wenn die Anzahl der Werte, deren Zustand "Sichtbar" ist, drei oder mehr beträgt,
**dadurch gekennzeichnet, dass** die Bildschirmsteuerung (18A) die Anzeigevorrichtung (12) veranlasst, einen Auswahlbildschirm anzuzeigen, in dem drei oder mehr Werte, deren Zustand "Sichtbar" ist, aufgelistet sind, wenn der Radio-Typ als Modus der Schaltfläche ermittelt wird, und den Auswahlbildschirm nicht auf der Anzeigevorrichtung (12) anzeigt und den im Wertanzeigebereich der Schaltfläche angezeigten Wert sofort auf einen anderen Wert umschaltet, dessen Zustand "Sichtbar" ist, in einem Fall, in dem der Umschalt-Typ als Modus der Schaltfläche bestimmt wird, der Computer ferner eine Speichervorrichtung (17) umfasst, die dazu konfiguriert ist, Gruppenverwaltungsinformationen zu speichern, die für eine bestimmte Gruppe einen bestimmten Wert angeben, dessen Einstellung für das vorbestimmte Einstellungselement untersagt ist,
wobei der Wertzustandsverwalter (18E, 218E) einen Zustand des bestimmten Werts auf "Nicht sichtbar" setzt, falls ein bei der Bildverarbeitungsvorrichtung (10, 210) angemeldeter Benutzer zu der bestimmten Gruppe gehört.

12. Ein Einstellprogramm (17A, 217A), das bewirkt, dass ein Computer, der eine Anzeigevorrichtung (12), eine Bedieneinrichtung (11), in die eine Anweisung eines Benutzers eingegeben wird, und einen Prozessor umfasst, durch Ausführen des Einstellprogramms (17A, 217A) mittels des Prozessors fungiert als:
ein Wertzustandsverwalter (18E, 218E), der dazu konfiguriert ist, Zustände einer Vielzahl von Werten zu verwalten, die bereitstehen zur Einstellung eines vorbestimmten Einstellungselements entsprechend einem von der Bildverarbeitungsvorrichtung (10, 210) verarbeiteten Auftrag; ein Schaltflächenmodusbestimmer (18B), der dazu konfiguriert ist, entweder einen Radio-Typ oder einen Umschalt-Typ als Modus einer Schaltfläche für das vorbestimmte Einstellungselement zu bestimmen, und eine Bildschirmsteuerung (18A), die dazu konfiguriert ist, einen Anzeigevorgang der Anzeigevorrichtung (12) zu steuern,
wobei das Einstellprogramm (17A, 217A) den Computer dazu veranlasst, ferner so zu arbeiten, dass der Wertzustandsverwalter (18E, 218E) in der Lage ist, als Zustand jedes Werts "Aktiv" festzulegen, was einen Zustand angibt, in dem der Wert auswählbar ist und der Wert ausgewählt ist, sowie "Nicht-Aktiv" festzulegen, was einen Zustand angibt, in dem der Wert auswählbar ist und der Wert nicht ausgewählt ist, die Bildschirmsteuerung (18A) bewirkt, dass die Anzeigevorrichtung (12) die Schaltfläche auf einem Einstellungsbildschirm anzeigt und einen ersten Werte, dessen Zustand "Aktiv" ist, in einem Wertanzeigebereich der Schaltfläche anzeigt,
in einem Fall, in dem die Schaltfläche durch die Bedieneinrichtung (11) betätigt wird, der Schaltflächenmodusbestimmer (18B) den Umschalt-Typ als den Modus der Schaltfläche bestimmt, wenn die Anzahl der Werte, deren Zustand "Aktiv" oder "Nicht-Aktiv" ist, unter den mehreren Werten zwei beträgt, und den Radio-Typ als den Modus der Schaltfläche bestimmt, wenn die Anzahl der Werte, deren Zustand "Aktiv" oder "Nicht-Aktiv" ist, drei oder mehr beträgt,
**dadurch gekennzeichnet, dass** die Bildschirmsteuerung (18A) die Anzeigevorrichtung (12) veranlasst, einen Auswahlbildschirm anzuzeigen, in dem drei oder mehr Werte, deren Zustand "Aktiv" oder "Nicht-Aktiv" ist, aufgelistet sind, wenn der Radio-Typ als der Modus der Schaltfläche ermittelt wird, und den Auswahlbildschirm nicht auf der Anzeigevorrichtung (12) anzeigt und einen Einstellwert des vorgegebenen Einstellungselements unmittelbar auf einen vorgegebenen Wert umschaltet, in einem Fall, in dem der Umschalt-Typ als der Modus der Schaltfläche bestimmt wird,
der Computer ferner eine Speichervorrichtung (17) umfasst, die dazu konfiguriert ist, Gruppenverwaltungsinformationen zu speichern, die für eine bestimmte Gruppe einen bestimmten Wert angeben, dessen Einstellung für das vorbestimmte Einstellungselement untersagt ist,
wobei der Wertzustandsverwalter (18E, 218E) einen Zustand des bestimmten Werts weder auf "Aktiv" noch auf "Nicht-Aktiv" setzt, falls ein bei der Bildverarbeitungsvorrichtung (10, 210) angemeldeter Benutzer zu der bestimmten Gruppe gehört.

## Revendications

1. Appareil de traitement d'images (10, 210) comprenant :
un dispositif d'affichage (12) ;
un dispositif d'actionnement (11) dans lequel une instruction d'un utilisateur est entrée ; et
un dispositif de commande (18) qui comporte un processeur, et fonctionne, au moyen du processeur exécutant un programme de réglage (17A, 217A), comme :
un gestionnaire d'états de valeurs (18E, 218E) configuré pour gérer des états d'une pluralité de valeurs qui sont disponibles pour régler un élément de réglage prédéterminé correspondant à une tâche traitée par l'appareil de traitement d'images (10, 210) ;
un dispositif de détermination d'actionnement de bouton (18B) configuré pour déterminer un parmi un type radio et un type bascule en tant qu'actionnement d'un bouton pour l'élément de réglage prédéterminé ; et
un dispositif de commande d'écran (18A) configuré pour commander une opération d'affichage du dispositif d'affichage (12),
dans lequel le gestionnaire d'états de valeurs (18E, 218E) est capable de régler, en tant qu'état de chaque valeur, Visible, indiquant un état dans lequel la valeur est visuellement reconnaissable par l'utilisateur en tant que choix d'une valeur réglée, et Non visible, indiquant un état dans lequel la valeur n'est pas visuellement reconnaissable par l'utilisateur en tant que choix de la valeur réglée, le dispositif de commande d'écran (18A) amène le dispositif d'affichage (12) à afficher le bouton sur un écran de réglage, et à afficher l'une des valeurs dont l'état est Visible dans une région d'affichage de valeur du bouton,
dans un cas où le bouton est actionné par le dispositif d'actionnement (11), le dispositif de détermination d'actionnement de bouton (18B) détermine le type bascule en tant qu'actionnement du bouton lorsque le nombre de valeurs dont l'état est Visible est de deux parmi la pluralité de valeurs, et détermine le type radio en tant qu'actionnement du bouton lorsque le nombre de valeurs dont l'état est Visible est de trois ou plus, **caractérisé en ce que**
le dispositif de commande d'écran (18A) amène le dispositif d'affichage (12) à afficher un écran de choix dans lequel trois valeurs ou plus dont l'état est Visible sont listées dans un cas où le type radio est déterminé en tant qu'actionnement du bouton, et n'affiche pas l'écran de choix sur le dispositif d'affichage (12) et modifie instantanément la valeur affichée dans la région d'affichage de valeur du bouton pour une autre valeur dont l'état est Visible dans un cas où le type bascule est déterminé en tant qu'actionnement du bouton,
l'appareil de traitement d'images (10, 210) comprend en outre un dispositif de stockage (17) configuré pour stocker des informations de gestion de groupe indiquant, pour un groupe spécifique, une valeur spécifique dont le réglage est interdit pour l'élément de réglage prédéterminé,
dans lequel le gestionnaire d'états de valeurs (18E, 218E) règle un état de la valeur spécifique sur Non visible dans un cas où un utilisateur connecté à l'appareil de traitement d'images (10, 210) appartient au groupe spécifique.

2. Appareil de traitement d'images (10, 210) selon la revendication 1,
dans lequel le dispositif de commande (18) fonctionne en outre comme un gestionnaire de fonctions d'extension (18D, 218D) configuré pour gérer une fonction d'extension pour l'appareil de traitement d'images (10, 210), et
le gestionnaire d'états de valeurs (18E, 218E) règle un état d'une valeur spécifique sur Visible dans un cas où une fonction d'extension spécifique est attribuée à l'appareil de traitement d'images (10, 210).

3. Appareil de traitement d'images (10, 210) selon la revendication 1,
dans lequel le dispositif de commande (18) fonctionne en outre comme un gestionnaire de fonctions d'extension (18D, 218D) configuré pour gérer des fonctions d'extension pour l'appareil de traitement d'images (10, 210) pour chaque utilisateur, et
le gestionnaire d'états de valeurs (18E, 218E) règle un état d'une valeur spécifique sur Visible dans un cas où une fonction d'extension spécifique est attribuée à l'utilisateur connecté à l'appareil de traitement d'images (10, 210).

4. Appareil de traitement d'images (10, 210) selon la revendication 1,
dans lequel le gestionnaire d'états de valeurs (18E, 218E) est en outre capable de régler, en tant qu'état de la valeur, Désactivé, indiquant un état dans lequel la valeur est non sélectionnable, et
le dispositif de commande d'écran (18A) affiche des choix correspondant à la valeur dont l'état est Désactivé parmi les choix sur le dispositif d'affichage (12) dans un état non sélectionnable dans un cas où le type radio est déterminé en tant qu'actionnement du bouton.

5. Appareil de traitement d'images (10, 210) selon la revendication 4,
dans lequel le dispositif de commande (18) fonctionne en outre comme un gestionnaire d'interdiction (18C) configuré pour gérer une condition d'interdiction indiquant qu'une première valeur prédéterminée est réglée pour un premier élément de réglage prédéterminé, en association avec une seconde valeur correspondant à un second élément de réglage prédéterminé différent du premier élément de réglage, et
le gestionnaire d'états de valeurs (18E, 218E) règle un état de la seconde valeur sur Désactivé dans un cas où la condition d'interdiction est satisfaite.

6. Appareil de traitement d'images (10, 210) comprenant :
un dispositif d'affichage (12) ;
un dispositif d'actionnement (11) dans lequel une instruction d'un utilisateur est entrée ; et
un dispositif de commande (18) qui comporte un processeur, et fonctionne, au moyen du processeur exécutant un programme de réglage (17A, 217A), comme :
un gestionnaire d'états de valeurs (18E, 218E) configuré pour gérer des états d'une pluralité de valeurs qui sont disponibles pour régler un élément de réglage prédéterminé correspondant à une tâche traitée par l'appareil de traitement d'images (10, 210) ;
un dispositif de détermination d'actionnement de bouton (18B) configuré pour déterminer un parmi un type radio et un type bascule en tant qu'actionnement d'un bouton pour l'élément de réglage prédéterminé ; et
un dispositif de commande d'écran (18A) configuré pour commander une opération d'affichage du dispositif d'affichage (12),
dans lequel le gestionnaire d'états de valeurs (18E, 218E) est capable de régler, en tant qu'état de chaque valeur, Actif, indiquant un état dans lequel la valeur est sélectionnable et la valeur est sélectionnée, et Non actif indiquant un état dans lequel la valeur est sélectionnable et la valeur n'est pas sélectionnée,
le dispositif de commande d'écran (18A) amène le dispositif d'affichage (12) à afficher le bouton sur un écran de réglage, et à afficher une première valeur dont l'état est Actif dans une région d'affichage de valeur du bouton,
dans un cas où le bouton est actionné par le dispositif d'actionnement (11), le dispositif de détermination d'actionnement de bouton (18B) détermine le type bascule en tant qu'actionnement du bouton lorsque le nombre de valeurs dont l'état est Actif ou Non actif est de deux parmi la pluralité de valeurs, et détermine le type radio en tant qu'actionnement du bouton lorsque le nombre de valeurs dont l'état est Actif ou Non actif est de trois ou plus, **caractérisé en ce que**
le dispositif de commande d'écran (18A) amène le dispositif d'affichage (12) à afficher un écran de choix dans lequel trois valeurs ou plus dont l'état est Actif ou Non actif sont listées dans un cas où le type radio est déterminé en tant qu'actionnement du bouton, et n'affiche pas l'écran de choix sur le dispositif d'affichage (12) et modifie instantanément une valeur réglée de l'élément de réglage prédéterminé pour une valeur prédéterminée dans un cas où le type bascule est déterminé en tant qu'actionnement du bouton,
l'appareil de traitement d'images (10, 210) comprend en outre un dispositif de stockage (17) configuré pour stocker des informations de gestion de groupe indiquant, pour un groupe spécifique, une valeur spécifique dont le réglage est interdit pour l'élément de réglage prédéterminé,
dans lequel le gestionnaire d'états de valeurs (18E, 218E) ne règle un état de la valeur spécifique ni sur Actif ni sur Non actif dans un cas où un utilisateur connecté à l'appareil de traitement d'images (10, 210) appartient au groupe spécifique.

7. Appareil de traitement d'images (10, 210) selon la revendication 6,
dans lequel le dispositif de commande (18) fonctionne en outre comme un gestionnaire de fonctions d'extension (18D, 218D) configuré pour gérer des fonctions d'extension pour l'appareil de traitement d'images (10, 210), et
le gestionnaire d'états de valeurs (18E, 218E) règle un état d'une valeur spécifique sur Non actif dans un cas où une fonction d'extension spécifique est attribuée à l'appareil de traitement d'images (10, 210).

8. Appareil de traitement d'images (10, 210) selon la revendication 6,
dans lequel le dispositif de commande (18) fonctionne en outre comme un gestionnaire de fonctions d'extension (18D, 218D) configuré pour gérer des fonctions d'extension pour l'appareil de traitement d'images (10, 210) pour chaque utilisateur de l'appareil de traitement d'images (10, 210), et
le gestionnaire d'états de valeurs (18E, 218E) règle un état d'une valeur spécifique sur Non actif dans un cas où une fonction d'extension spécifique est attribuée à l'utilisateur connecté à l'appareil de traitement d'images (10, 210).

9. Appareil de traitement d'images (10, 210) selon la revendication 6,
dans lequel le dispositif de commande (18) fonctionne en outre comme un gestionnaire d'interdiction (18C) configuré pour gérer une condition d'interdiction indiquant qu'une première valeur prédéterminée est réglée pour un premier élément de réglage prédéterminé, en association avec une seconde valeur correspondant à un second élément de réglage prédéterminé différent du premier élément de réglage,
le gestionnaire d'états de valeurs (18E, 218E) est en outre capable de régler, en tant qu'état de la valeur, Désactivé, indiquant que la valeur est non sélectionnable, et
le gestionnaire d'états de valeurs (18E, 218E) règle un état de la seconde valeur sur Désactivé dans un cas où la condition d'interdiction est satisfaite.

10. Appareil de traitement d'images (10, 210) selon la revendication 6,
dans lequel le gestionnaire d'états de valeurs (18E, 218E) change un état d'une valeur avant le changement en Non actif et change un état d'une valeur après le changement en Actif si le dispositif d'actionnement (11) reçoit une instruction pour désigner l'un des choix dans un état dans lequel les choix sont affichés sur le dispositif d'affichage (12).

11. Programme de réglage (17A, 217A) amenant un ordinateur comportant un dispositif d'affichage (12), un dispositif d'actionnement (11) dans lequel une instruction d'un utilisateur est entrée et un processeur à fonctionner comme, au moyen du processeur exécutant le programme de réglage (17A, 217A) :
un gestionnaire d'états de valeurs (18E, 218E) configuré pour gérer des états d'une pluralité de valeurs qui sont disponibles pour régler un élément de réglage prédéterminé correspondant à une tâche traitée par l'appareil de traitement d'images (10, 210) ;
un dispositif de détermination d'actionnement de bouton (18B) configuré pour déterminer un parmi un type radio et un type bascule en tant qu'actionnement d'un bouton pour l'élément de réglage prédéterminé ; et
un dispositif de commande d'écran (18A) configuré pour commander une opération d'affichage du dispositif d'affichage (12),
dans lequel le programme de réglage (17A, 217A) amène l'ordinateur à fonctionner en outre de sorte que
le gestionnaire d'états de valeurs (18E, 218E) soit capable de régler, en tant qu'état de chaque valeur, Visible, indiquant un état dans lequel la valeur est visuellement reconnaissable par l'utilisateur en tant que choix d'une valeur réglée, et Non visible, indiquant un état dans lequel la valeur n'est pas visuellement reconnaissable par l'utilisateur en tant que choix de la valeur réglée,
le dispositif de commande d'écran (18A) amène le dispositif d'affichage (12) à afficher le bouton sur un écran de réglage, et à afficher l'une des valeurs dont l'état est Visible dans une région d'affichage de valeur du bouton,
dans un cas où le bouton est actionné par le dispositif d'actionnement (11), le dispositif de détermination d'actionnement de bouton (18B) détermine le type bascule en tant qu'actionnement du bouton lorsque le nombre de valeurs dont l'état est Visible est de deux parmi la pluralité de valeurs, et détermine le type radio en tant qu'actionnement du bouton lorsque le nombre de valeurs dont l'état est Visible est de trois ou plus, **caractérisé en ce que**
le dispositif de commande d'écran (18A) amène le dispositif d'affichage (12) à afficher un écran de choix dans lequel trois valeurs ou plus dont l'état est Visible sont listées dans un cas où le type radio est déterminé en tant qu'actionnement du bouton, et n'affiche pas l'écran de choix sur le dispositif d'affichage (12) et modifie instantanément la valeur affichée dans la région d'affichage de valeur du bouton pour une autre valeur dont l'état est Visible dans un cas où le type bascule est déterminé en tant qu'actionnement du bouton,
l'ordinateur comprend en outre un dispositif de stockage (17) configuré pour stocker des informations de gestion de groupe indiquant, pour un groupe spécifique, une valeur spécifique dont le réglage est interdit pour l'élément de réglage prédéterminé,
dans lequel le gestionnaire d'états de valeurs (18E, 218E) règle un état de la valeur spécifique sur Non visible dans un cas où un utilisateur connecté à l'appareil de traitement d'images (10, 210) appartient au groupe spécifique.

12. Programme de réglage (17A, 217A) amenant un ordinateur comportant un dispositif d'affichage (12), un dispositif d'actionnement (11) dans lequel une instruction d'un utilisateur est entrée et un processeur à fonctionner comme, au moyen du processeur exécutant le programme de réglage (17A, 217A) :
un gestionnaire d'états de valeurs (18E, 218E) configuré pour gérer des états d'une pluralité de valeurs qui sont disponibles pour régler un élément de réglage prédéterminé correspondant à une tâche traitée par l'appareil de traitement d'images (10, 210),
un dispositif de détermination d'actionnement de bouton (18B) configuré pour déterminer un parmi un type radio et un type bascule en tant qu'actionnement d'un bouton pour l'élément de réglage prédéterminé, et
un dispositif de commande d'écran (18A) configuré pour commander une opération d'affichage du dispositif d'affichage (12),
dans lequel le programme de réglage (17A, 217A) amène l'ordinateur à fonctionner en outre de sorte que
le gestionnaire d'états de valeurs (18E, 218E) soit capable de régler, en tant qu'état de chaque valeur, Actif, indiquant un état dans lequel la valeur est sélectionnable et la valeur est sélectionnée, et Non actif, indiquant un état dans lequel la valeur est sélectionnable et la valeur n'est pas sélectionnée,
le dispositif de commande d'écran (18A) amène le dispositif d'affichage (12) à afficher le bouton sur un écran de réglage, et à afficher une première valeur dont l'état est Actif dans une région d'affichage de valeur du bouton, dans un cas où le bouton est actionné par le dispositif d'actionnement (11), le dispositif de détermination d'actionnement de bouton (18B) détermine le type bascule en tant qu'actionnement du bouton lorsque le nombre de valeurs dont l'état est Actif ou Non actif est de deux parmi la pluralité de valeurs, et détermine le type radio en tant qu'actionnement du bouton lorsque le nombre de valeurs dont l'état est Actif ou Non actif est de trois ou plus,
**caractérisé en ce que**
le dispositif de commande d'écran (18A) amène le dispositif d'affichage (12) à afficher un écran de choix dans lequel trois valeurs ou plus dont l'état est Actif ou Non actif sont listées dans un cas où le type radio est déterminé en tant qu'actionnement du bouton, et n'affiche pas l'écran de choix sur le dispositif d'affichage (12) et modifie instantanément une valeur réglée de l'élément de réglage prédéterminé pour une valeur prédéterminée dans un cas où le type bascule est déterminé en tant qu'actionnement du bouton,
l'ordinateur comprend en outre un dispositif de stockage (17) configuré pour stocker des informations de gestion de groupe indiquant, pour un groupe spécifique, une valeur spécifique dont le réglage est interdit pour l'élément de réglage prédéterminé,
dans lequel le gestionnaire d'états de valeurs (18E, 218E) ne règle un état de la valeur spécifique ni sur Actif ni sur Non actif dans un cas où un utilisateur connecté à l'appareil de traitement d'images (10, 210) appartient au groupe spécifique.
